(19) Europäisches Patentamt
European Patent Office
Office européen des brevets

(11) Publication number: **0 400 746 B1**

(12) # EUROPEAN PATENT SPECIFICATION

(45) Date of publication of patent specification: **22.06.94**

(51) Int. Cl.$^5$: **C08F 283/08**, C08L 51/08, B32B 7/02

(21) Application number: **90201349.9**

(22) Date of filing: **29.05.90**

(54) **Cross-linkable compositions based on polyphenylene ethers and unsaturated monomers copolymerizable radically.**

(30) Priority: **02.06.89 IT 2074089**
**01.12.89 IT 2256589**

(43) Date of publication of application:
**05.12.90 Bulletin 90/49**

(45) Publication of the grant of the patent:
**22.06.94 Bulletin 94/25**

(84) Designated Contracting States:
**AT BE CH DE DK ES FR GB GR IT LI LU NL SE**

(56) References cited:
**EP-A- 0 366 183**
**US-A- 3 356 761**

**DATABASE WPIL, no. 88-046307, Derwent Publications Ltd, London, GB;& JP-A-63 003 946 (MATSUSHITA ELEC. WORKS) 08-01-1988**

**DATABASE WPIL, no. 88-138028, Derwent Publications Ltd, London, GB;& JP-A-63 081 172 (MATSUSHITA ELEC. WORKS) 12-04-1988**

(73) Proprietor: **ENICHEM S.p.A.**
**Via Mozart 1**
**I-20122 Milano(IT)**

(72) Inventor: **Penco, Maurizio**
**Viale Risorgimento 1**
**I-20073 Codogno, Milan(IT)**
Inventor: **Villa, Anna Maria**
**Via F. Cavallotti 112**
**I-20052 Monza, Milan(IT)**
Inventor: **Pegoraro, Mario**
**S. Felice-Strada 8, N.11**
**I-20099 Segrate, Milan(IT)**
Inventor: **Di Silvestro, Giuseppe**
**Via Ouasimodo 4**
**I-20030 Lentate Sul Seveso, Milan(IT)**
Inventor: **Gobbi, Cristina**
**Via Cesare Battisti 17**
**I-20097 San Donato Milanese, Milan(IT)**
Inventor: **Gargani, Luciano**
**Via Jannozzi 44**
**I-20097 San Donato Milanese, Milan(IT)**

(74) Representative: **Fusina, Gerolamo et al**
**Ing. Barzanò & Zanardo Milano S.p.A,**
**Via Borgonuovo, 10**
**I-20121 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 400 746 B1

## Description

The present invention relates to toughenable cross-linkable polymer compositions based on polyphenylene ether (PEE) and unsaturated monomers (co)polymerizable radically and to the resins obtained thereby after thermal or U.V. treatment.

Such compositions are directly usable in the production of manufactured articles of any required shape and size, by cross-linking them after they have been poured or injected into suitable moulds.

The resins obtained by thermal or U.V. cross-linking of such polymer compositions are characterised by possessing not only a high glass transition temperature (Tg), but also an exceptional dimensional stability up to temperatures close to the Tg and excellent adhesion to metal supports.

A high Tg is also a known special characteristic of polyphenylene ether (PPE) as such.

This property is however not immediately utilizable because the well known high viscosity of PPE in its molten state together with the consequent high working temperatures and high level of susceptibility to thermal oxidation mean that PPE is difficult to work on its own. In this respect, at the high temperatures required to obtain a certain workability of the polymer, undesirable oxidation processes frequently intervene as shown by partial cross-linking and gelling, with browning of the polymer material.

It is known that these problems have been partly solved by mixing PPE with thermoplastic styrene polymers because of the perfect compatibility between the two resins.

Such compositions are claimed in numerous patents such as US-A-3,356,761, US-A-3,373,226, GB-A-1,125,620, SU-A-269,052 and US-A-3,639,506.

With such systems a greater thermo-oxidative stability is obtained together with improved workability, however the Tg of the system suffers a considerable decrease.

A description of the variation in the Tg of such blends as a function of the relative composition is given in "Polymer Eng. and Sci. 17(3), 213-219 (1977)".

In addition the articles obtained from such mixtures possess insufficient dimensional stability and creep resistance when under the particularly severe conditions of use such as those increasingly demanded by manufacturing industries.

The development of polymer materials possessing a high glass transition temperature, rigidity, dimensional stability and creep resistance is justified by the considerable increase in the possibilities for using them in the industrial field, particularly in the automotive and domestic appliance fields in which an ever increasing quantity of metal parts is being replaced by high-performance polymers.

In the European patent application publication N. 0366183 the applicant describes polymer compositions able, by radical polymerization of the monomers present and simultaneous cross-linking of the growing macromolecules, to produce perfect polymer blends between polyphenylene ether and cross-linked vinylaromatic polymers (polyesters and/or the like) characterised by a very high glass transition temperature ($Tg \geqq 180°C$) and considerable dimensional stability, in addition to perfect transparency of the resultant manufactured articles.

According to this invention the polyphenylene ether is treated with styrene and other mono-unsaturated or polyunsaturated vinylaromatic monomers, until total or partial solubilization thereof is attained, and after adding the radical polymerization initiator, a possible accelerator and the usual additives for such compositions it is subjected to thermal or U.V. treatment. In this manner perfect transparent polymer blends with the aforesaid characteristics are obtained, consisting of two polymer matrices of which the vinylaromatic matrix is cross-linked.

It has now been surprisingly found that by treating at least one polyphenylene ether from those specified hereinafter with at least one mono-unsaturated monomer pertaining to those vinyl and acrylic monomer classes able to produce (co)polymers in the presence of radical initiators and at least one polyunsaturated monomer, polymer compositions are obtained which can be transformed into polymer blends characterise by a high Tg and a considerable dimensional stability.

In accordance therewith the present invention relates firstly to toughenable polymer compositions cross-linkable thermally or by the effect of ultraviolet radiation, comprising:

a) at least 10% by weight of at least one polyphenylene ether represented by one of the following general formulas (I), (II), (III):

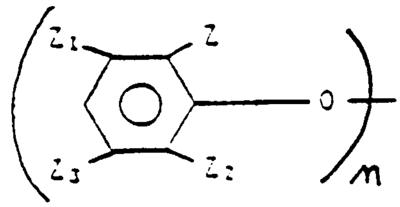

(I)

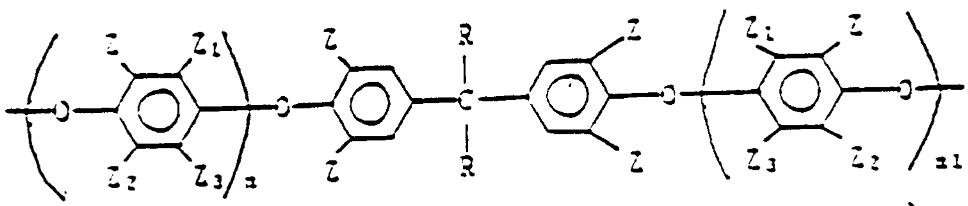

(II)

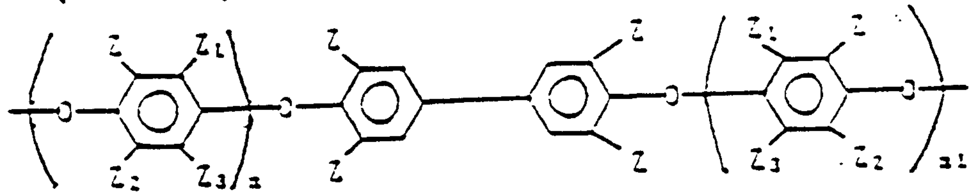

(III)

where Z, $Z_1$, $Z_2$, $Z_3$ are independently chosen from the group consisting of hydrogen, chlorine, bromine, fluorine, $C_1$-$C_4$ alkyl or substituted alkyl, n and $n_1$ are whole numbers independent of each other and having a value greater than 10, and R is hydrogen or a $C_1$-$C_4$ alkyl radical;

b) at least 10% by weight of a mixture of mono-unsaturated monomers consisting essentially of:

b1) from 1 to 97.38% by weight of at least one mono-unsaturated vinylaromatic monomer chosen from those of general formula:

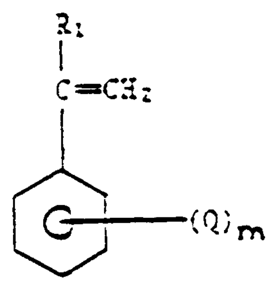

(IV)

where $R_1$ is hydrogen or a $C_1$-$C_4$ linear alkyl radical; Q is hydrogen, a halogen, a linear or branched $C_1$-$C_4$ alkyl radical or $-OCH_3$; m is a whole number between 1 and 5;

b2) from 0 to 99% by weight of at least one monomer containing vinyl-unsaturations and/or at least one (meth)acrylic monomer represented by the general formula (V):

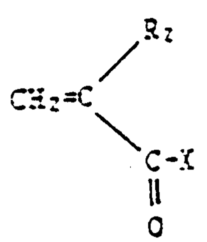

(V)

where X represents, independently, a hydroxyl radical or an $-OR_3$ radical; $R_2$ represents a hydrogen atom or a methyl radical; $R_3$ represents a $C_1$-$C_{20}$ linear or branched chain, a glycidyl group or a polyoxyethylene chain $(-CH_2CH_2O)_n-CH_2CH_2OR_4$ where n is a whole number between 0 and 20, and

$R_4$ is hydrogen, a methyl radical or an amide group;

b3) from 2.62 to 99% by weight of an unsaturated compound selected from cyclic anhydrides, cyclic dianhydrides containing unsaturations able to (co)polymerize radicalically with the monomers $b_1$ and $b_2$, or an unsaturated compound deriving from the reaction between an unsaturated cyclic dianhydride and, respectively, ammonia, a primary- or a secondary amine;

b4) from 0 to 99% by weight of an unsaturated compound deriving from the reaction between an unsaturated cyclic dianhydride and, respectively, an alcohol, ammonia, a primary or secondary amine, or water;

c) from 1 to 80% by weight of a polyunsaturated monomer, and

d) from 0.01 to 10% by weight of one or more generators of radicals able to promote the thermal and/or U.V. polymerization of the monomers of components b) and c).

As stated, polyphenylene ethers are the only polymer material contained in the compositions of the present invention.

Polyphenylene ethers (PPE) are compounds which have been known for a considerable time. They are describe in numerous patents and are generally obtained by oxidative coupling, in the presence of a suitable catalyst, of one or more alkylphenols of which that most widely used is 2,6-dimethylphenol. They have the general formula:

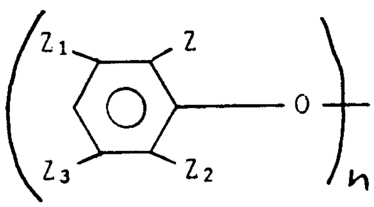

(I)

where Z, $Z_1$, $Z_2$, $Z_3$ are independently chosen from the group consisting of hydrogen, chlorine, bromine, fluorine, $C_1$-$C_4$ alkyl or substituted alkyl, and n is the total number of monomer units, being a whole number greater than 10.

Examples of PPEs which can be used in the production of the polymer compositions of the present invention and of the corresponding articles obtained by their cross-linking are:

poly(2,6-dimethyl-1,4-phenylene ether)
poly(2,6-diethyl-1,4-phenylene ether)
poly(2-methyl-6-ethyl-1,4-phenylene ether)
poly(2-methyl-6-propyl-1,4-phenylene ether)
poly(2,6-dipropyl-1,4-phenylene ether)
poly(2,3,6-trimethyl-1,4-phenylene ether)
poly(2-chloro-1,4-phenylene ether)
poly(2-bromo-1,4-phenylene ether)
poly(2-phenyl-1,4-phenylene ether)
poly(2-chloro-6-bromo-1,4-phenylene ether)
poly(2,6-dichloro-1,4-phenylene ether)

The PPE preferably used for the purposes of the present invention is poly(2,6-dimethyl-1,4-phenylene ether)

PPEs obtained by oxidative coupling of two or more different phenols are equally suitable for the purposes of the present invention. Generally in these copolymers one of the two or more monomer components is 2,6-dimethylphenol.

Equally suitable for the purposes of the present invention are polyphenylene ethers corresponding to the following general formulas:

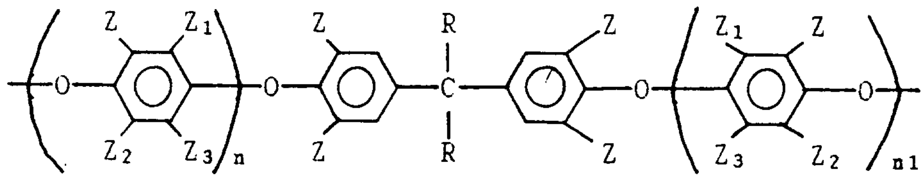
(II)

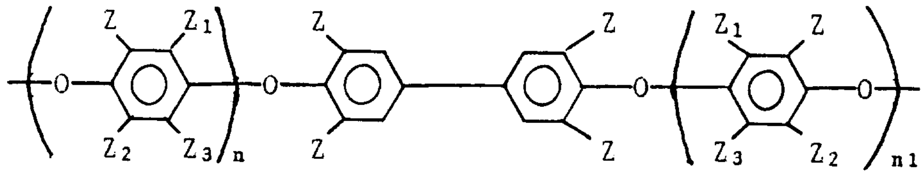
(III)

where Z, $Z_1$, $Z_2$, $Z_3$ and n have the same meanings as in the preceding formula (I), n and n1 are whole numbers independent of each other and having a value greater than 10, and R is hydrogen or a $C_1$-$C_4$ alkyl radical.

The synthesis methods for the polyphenylene ethers corresponding to formulas II and III are well known to experts of the art and are described for example in Die Makromolekulare Chemie 186, 1835-1853 (1985).

The most well known of the PPEs corresponding to formula II is the copolymer obtained from tetramethylbisphenol A and 2,6-dimethylphenol. Example of a PPE corresponding to general formula III is the copolymer obtained from tetramethyldiphenylenediol and 2,6-dimethylphenol.

By the mono-unsaturated vinylaromatic monomer component (component b1 of the polymer compositions of the present invention) is meant at least one iso-alkenyl compound from those of general formula

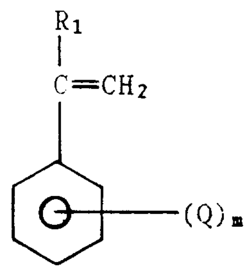
(IV)

where $R_1$ is hydrogen or a $C_1$-$C_4$ alkyl radical; Q is hydrogen, a halogen, a linear or branched $C_1$-$C_4$ alkyl or $-OCH_3$; m is a whole number between 1 and 5.

Examples of monomer compounds corresponding to general formula (II) are styrene, alphamethylstyrene, ethylstyrene, alphabromostyrene, alphachlorostyrene, vinyltoluene, vinylxylenes. Examples of unsaturated vinyl monomers are vinylacetate, vinyl pivalate, vinyl propionate, vinyl versatate and vinyl pyrrolidone. The monomers of (meth)acrylic type (component b2 of the polymer mixture able to (co)-polymerize radically) can be represented by the general formula (V):

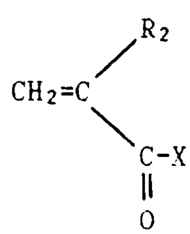
(V)

where $R_2$ represents a hydrogen atom or a methyl radical; X represents, independently, a hydroxyl radical, an $OR_3$ alkoxy radical where $R_3$ indicates a $C_1$-$C_{20}$ linear or branched chain, a glycidyl group, a polyoxyethylene chain $(-CH_2CH_2O-)_nCH_2CH_2OR_4$ where n is a whole number between 0 and 20 and $R_4$ is hydrogen, a methyl radical or an amide group.

Examples include the following compounds: acrylic and methacrylic acid, methyl-, ethyl-, butyl-acrylate and methacrylate, -laurylacrylate and methacrylate, glycidylacrylate and methacrylate, tetraethyleneglycolmonomethylether acrylic and methacrylic ester, acrylamide and methacrylamide.

Examples of unsaturated cyclic anhydrides or dianhydrides which are able to copolymerize radically with the other monomers present in the mixture (components b1 and b2) include the following compounds: anhydrides deriving from $\beta$-unsaturated dicarboxylic acids such as itaconic and citraconic anhydrides, and the following anhydrides:

cis-5-norbornene-endo-2,3-dicarboxylic anhydride:

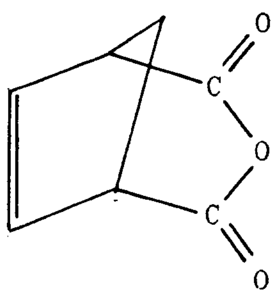

(VI)

cis-1,2,3,6-tetrahydrophthalic anhydride:

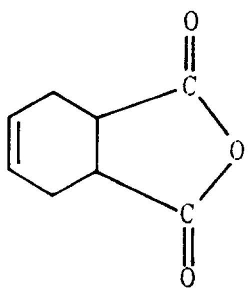

(VII)

bicyclo[2,2,2]-oct-7-ene-2,3,5,6-tetracarboxylic dianhydride:

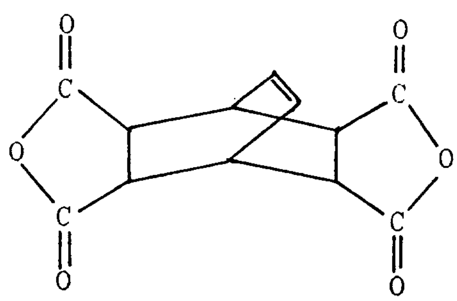

(VIII)

endo-bicyclo[2,2,2]-oct-5-ene-2,3-dicarboxylic anhydride:

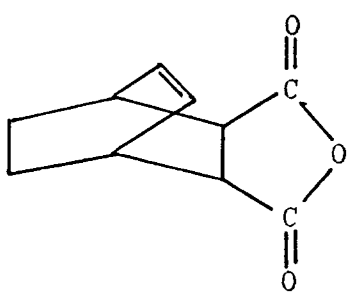

(IX)

maleic anhydride:

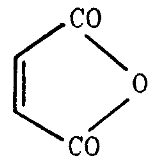

(X)

and 4-vinylphthalic anhydride:

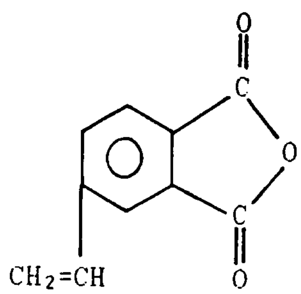

(XI)

Examples of compounds pertaining to class b4 include derivatives of unsaturated cyclic anhydrides, diethyl maleate, monoethylmaleate, and monoamides, diamides and imides obtained by reacting unsaturated cyclic anhydrides with ammonia or a primary amine.

As polyunsaturated monomers (component c of the polymer mixtures of the invention) able to generate a polymer cross-linkage responsible for the exceptional characteristics of the articles obtained from the polymer mixtures of the invention, polyfunctional monomers pertaining to the following categories can be used:

1) Polyunsaturated aromatic vinyl monomers of general formula:

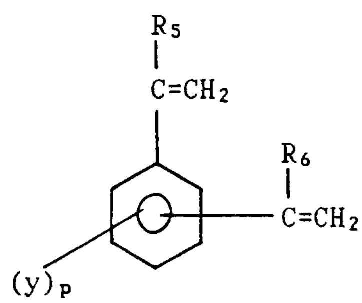

(XII)

where y is hydrogen, a halogen, a linear or branched $C_1$-$C_4$ alkyl, $-OCH_3$ or

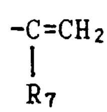

$R_5$, $R_6$, $R_7$ can be, independently of each other, hydrogen or a $C_1$-$C_4$ alkyl radical; p is a whole number between 1 and 4.

The most significant examples of such monomers are divinylbenzene and trivinylbenzene.

2) Polyunsaturated (meth)acrylic monomers. These are generally obtained by esterification of a polyvalent alcohol with (meth)acrylic acid. They have the general formula:

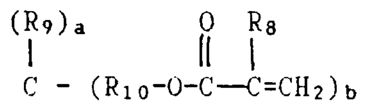

(XIII)

where $R_8$ represents a hydrogen atom or a methyl radical; $R_9$ represents a hydrogen atom or a linear or branched $C_1$-$C_{10}$ alkyl radical; $R_{10}$ represents a $C_1$-$C_3$ linear alkyl biradical; a and b are two numbers such that $a+b=4$ and $b \geq 2$.

The following polyunsaturated monomers are included in this formula: pentaerythritol tetraacrylate, pentaerythritol tetramethacrylate, 1,1,1-trimethylolpropane triacrylate.

3) Polyunsaturated monomers containing two or more phenylene maleimidic groups are also suitable for the purpose. These have the general formula:

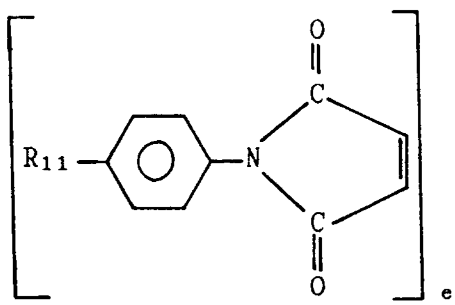

(XIV)

where $R_{11}$ represents an aliphatic, aromatic or alkylaromatic multiple radical and e is a whole number ≧ 2. More particularly, the group of monomers corresponding to general formula (X V) include monomers of type:

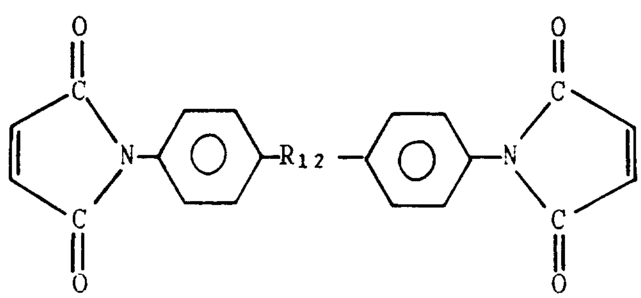

(XV)

where $R_{12}$ is a $C_1$-$C_{12}$ linear or branched aliphatic or cycloaliphatic biradical.

The rubber component (component e) of the mixtures described in the present invention consists of one or more elastomeric (co)polymers pertaining to one of the following groups: polybutadiene, polyisoprene, styrene-diene copolymers containing up to 50% of styrene, acrylic rubbers, nitrile rubbers, butyl rubbers, olefinic rubbers such as EPDM and EPR, and styrene-ethylene-butene copolymers with a styrene content of up to 50%. Examples of such rubbers are styrene-butadiene linear and star block copolymers, acrylonitrile-butadiene-styrene (ABS) graft polymer and methylmethacrylate-acrylonitrile-butadiene-styrene (MABS) copolymer.

To obtain the results of the invention it is necessary to also add to the reaction mass (consisting of PPE, at least one elastomeric (co)polymer, at least one mono-unsaturated reactive monomer and a cross-linking agent comprising at least one polyunsaturated reactive monomer) small quantities of an initiator which promotes the radical polymerization of the monomers, with simultaneous cross-linking of the polymerization mass by virtue of the polyunsaturated monomers.

If the polymerization and cross-linking of the mass are to be effected in the traditional manner, a small quantity of an organic peroxide of between 0.01 and 10% with respect to the previously described component b added to the mass before its use is sufficient for this purpose. The choice of initiator obviously depends on the temperatures and times involved in the working and moulding of the polymer

composition for the purpose of forming the desired articles.

Suitable to this purpose are in any event all peroxides and hydroperoxides and all those radical generators which can be dissolved or dispersed in the polymer mixture.

Typical examples of such initiators are:

- dialkylperoxides such as di-tert-butylperoxide and dicumylperoxide;
- diacylperoxides such as benzoylperoxide, diacetylperoxide, bis(2,4-dichlorobenzoyl)peroxide, dilauroylperoxide, bis(3,5,5-trimethylhexanoyl)peroxide, dipropionylperoxide, dioctanoylperoxide, decanoylperoxide.
- peresters such as tert-butyl-perbenzoate, tert-butylpivalate, tert-butyl-peroctoate, tert-butylperacetate;
- peracetates such as 2,2-bis(tert-butylperoxy)-butane;
- peroxycarbonates such as cyclohexylperoxycarbonate, bis(2-ethylhexyl)-peroxycarbonate, di-n-butylperoxycarbonate, diisopropylperoxycarbonate;
- azo compounds and azobisisobutyronitrile, and in addition cyclohexane peroxide, methylethylketone peroxide and acetone peroxide.

These initiators can be used either alone or in combination with suitable accelerators such as aromatic amines, cobalt or vanadium organic salts.

The possibility of choosing and gauging the combination of the aforesaid initiators and the most suitable accelerators makes it possible, in forming the desired articles, to process the compositions of the present invention within a wide temperature range starting from values close to ambient and extending up to 300 °C.

If on the other hand it is desired to effect the cross-linking polymerization of the polymer composition of the present invention at low temperature by means of ultraviolet radiation, it is a good rule to add a small quantity of an organic photoinitiator, of generally between 0,01 and 10 parts by weight of the total monomers (components b + c) to the mass to be transformed.

Organic photoinitiators useful for this purpose are all those compounds soluble or dispersable in the polymer compositions of the present invention and able to generate free radicals under the action of ultraviolet radiation.

Examples of the application of such polymerization methods are reported in the following publications: J.A.C.S. 77, 494 (1955); Trans. Faraday Soc. 50, 73 (1954).

Examples of organic photoinitiators are: benzyldimethyl-ketal, 2-hydroxy-2-methyl-1-phenylpropanone-1, thioxanthone and generally the benzoin esters.

The photoinitiator is preferably present in a quantity of between 1 and 3% by weight with respect to the total monomers (components b + c). It acts both in the presence and in the absence of the aforesaid peroxide component, although the simultaneous presence of this latter is preferred.

If articles with self-extinguishing properties are required, flame retardants such as an organic phosphate can be added to the polymer compositions of the present invention, together optionally with a halogenated compound, this latter acting with synergic effect on the phosphate.

Examples of organic phosphates are triphenylphosphate, tritoluylphosphate, dibutylphenylphosphate, trinonylphenylphosphate, tricresylphosphate.

The halogenated compound can for example be hexabromobenzene, tetrabromobutane, pentabromotoluene, decachlorodiphenyl, decabromodiphenyl, tetrabromophthalic anhydride.

If complete non-flammability of the articles is desired, a further complementary addition of antimony trioxide can be made.

The polymer compositions of the present invention can also contain the usual additives such as various minerals and fillers, glass fibres, pigment, stabilizers, flame retardants, plasticizers, lubricants, antistatic agents.

The individual components of the mixtures of the present invention are generally mixed together in a suitable mixer such as a Brabender or Banbury mixer at a temperature and for a time dependent on the individual components present, and well known to the expert of the art. The initiator is preferably added at the end of mixing to prevent early decomposition.

The mass thus obtained can be moulded in a compression press or injected into a mould, depending on the fluidity of the system at the working temperature. A curing cycle then follows by heating the mould and keeping the material under pressure, followed by a cooling cycle. Typical operating conditions, which depend on the nature of the components and the initiator, are given in the examples which follow. The polymer blends obtained by thermal or U.V. polymerization of the polymer compositions of the present invention are characterised by glass transition temperatures (Tg) which are compatible with those of the previously mentioned systems based on PPE and vinylaromatic monomers, but with improved engineering properties. They are further characterised by considerable adhesion to metallic surfaces.

The large number of monomers which can be used, many of which in addition to the unsaturations required for their (co)polymerization and cross-linking also contain polar functional groups such as glycidyl, amino, nitrile, carboxyl, ester and anhydride groups, means that a a wide range of polymer blends can be synthesized all characterised by possessing the two aforesaid special properties, ie a high Tg and dimensional stability under hot conditions, but which differ from each other by their surface appearance, electrical and mechanical properties, resistance to solvents, coatability, transparency.

It is therefore possible to construct polymer blends to specification, based on the type of application and market requirements.

As in the case of the compositions described in the preceding European patent application (European patent application publication N. 0366183), the polymer compositions according to the present invention also differ from the known art in that the PPE is the only polymer present, the other polymers being formed during the production of the desired articles, by thermal or U.V. treatment of the composition. The use of polymer compositions of the present invention therefore dispenses with the need to mix polyphenyl with other polymers in their molten state, thus avoiding the problems involving polymer stability and modification characteristic of the known art.

In particular, the compatibility between the polyphenylene ether and the resultant cross-linked copolymers after radical polymerization of the present compositions is equal to or better than that obtainable by mixing PPE in the molten state with the corresponding thermoplastic copolymers obtained by polymerizing in like proportions the mono-unsaturated monomers pertaining to the component b) categories of the present invention.

The polymer blends obtained after thermal or U.V. treatment of the compositions according to the present invention, and also representing an aspect of the invention itself, can be used for all applications in which resins with high thermal characteristics are used.

One of the most usual applications is the production of electronic components, such as supports for printed circuits, for which materials are required having high dimensional stability under hot conditions and good thermal properties in addition to the high insulation properties typical of polymer materials.

As stated, they can also be used in the automotive field in which there is a prevailing tendency to replace an increasingly greater quantity of metal parts with polymers of similar characteristics.

Again in this case, resins are required having high dimensional stability under hot conditions to allow them to be painted on the production line with the vehicle body. They are also applicable to the domestic electrical appliances field in which they can even replace moving mechanical parts such as toothed gears and pulleys, which are generally of metal construction.

These compositions also possess special properties after cross-linking, such as high adhesion to metal.

## EXAMPLE 1

50 parts (meaning parts by weight throughout the examples) of poly(2,6-dimethyl-1,4-phenyleneoxide) having an intrinsic viscosity of 0.54 dl/g (known as PPE in the following examples) and 50 parts of a mixture consisting of 37.2 parts of styrene monomer, one part of maleic anhydride (equivalent to 2% on the monomers) and 11.8 parts of a 50/50 w/w mixture of ethylvinylbenzene and divinylbenzene (equivalent to 10 mol% of divinylbenzene on the monomers) were fed into a mechanical mixer. After mixing for 10 minutes at a stirring rate of 80 r.p.m., t = 50-80 °C, the system was cooled to 49 °C and the stirring rate reduced to 20 r.p.m.

1% by weight (with respect to the monomers) of tert-butyl perbenzoate was then added.

After the peroxide addition was complete the mixture was kept stirring for 2 minutes at a rate of 60 r.p.m. while maintaining the temperature below 60 °C.

The product of the mixing was then subjected to reactive moulding in a compression press, under the following test conditions:

a) isothermal at 120 °C for 15 minutes
b) increase from 120 to 200 °C (rate 5 °C/minute)
c) isothermal at 200 °C for 15 minutes;
d) rapid cooling (applied pressure = 16 kg/cm$^2$)

The composition and the Tg of the resultant material, determined by DSC, are shown in the accompanying Table 1.

The curve of tan $\delta$ against temperature, evaluated by the Rheovibron dynamic-mechanical method (frequency 11 Hz) is shown in Figure 1.

Table 1 also shows the Tg of the material as evaluated by the Rheovibron dynamic-mechanical method at a frequency of 11 Hz.

The Tg is represented by the maximum point of the curve of tan δ against temperature.

EXAMPLE 2

50 parts of PPE and 50 parts of a mixture consisting of 34.8 parts of styrene, 3.7 parts of 5-norbornene-2,3-dicarboxyl anhydride (equivalent to 5 mol% on the monomers) and 11.5 parts of a 50/50 w/w mixture of ethylvinylbenzene and divinylbenzene (equivalent to 10 mol% of divinylbenzene on the monomers) were fed into a mechanical mixer.

The system was mixed under the same conditions as in Example 1.

The peroxide (tert-butylperbenzoate) was added as described in Example 1 in a quantity of 1% w/w on the monomers.

The composition and the Tg of the resultant material, determined by DSC, are shown in the accompanying Table 1.

The curve of tan δ against temperature, evaluated by the Rheovibron dynamic-mechanical method (frequency 11 Hz) is shown in Figure 2.

Table 1 also shows the Tg of the material as evaluated by the Rheovibron dynamic-mechanical method at a frequency of 11 Hz.

The Tg is represented by the maximum point of the curve of tan δagainst temperature.

EXAMPLE 3

50 parts of PPE and 50 parts of a mixture consisting of 35.0 parts of styrene, 3.4 parts of 1,2,3,6-tetrahydrophthalic anhydride (equivalent to 5 mol% on the monomers) and 11.6 parts of a 50/50 w/w mixture of ethylvinylbenzene and divinylbenzene (equivalent to 10 mol% of divinylbenzene on the monomers) were fed into a mechanical mixer.

The system was mixed under the same conditions as in Example 1. The peroxide (tert-butylperbenzoate) was added as described in Example 1 in a quantity of 1% w/w on the monomers.

The composition and the Tg of the resultant material, determined by DSC, are shown in the accompanying Table 1.

The curve of tan δ against temperature, evaluated by the Rheovibron dynamic-mechanical method (frequency 11 Hz) is shown in Figure 3.

Table 1 also shows the Tg of the material as evaluated by the Rheovibron dynamic-mechanical method at a frequency of 11 Hz. The Tg is represented by the maximum point of the curve of tan δ against temperature.

EXAMPLE 4.

50 parts of PPE and 50 parts of a mixture consisting of 34.6 parts of styrene, 3.9 parts of endo-bicyclo-[2,2,2]oct-5-ene-2,3-dicarboxylic anhydride and 11.5 parts of a 50/50 w/w mixture of ethylvinylbenzene and divinylbenzene (equivalent to 10 mol% of divinylbenzene on the monomers) were fed into a mechanical mixer.

The system was mixed under the same conditions as in Example 1.

The peroxide (tert-butylperbenzoate) was added in the same manner in a quantity of 1% w/w on the monomers.

The composition and the Tg of the resultant material, determined by DSC, are shown in the accompanying Table 1.

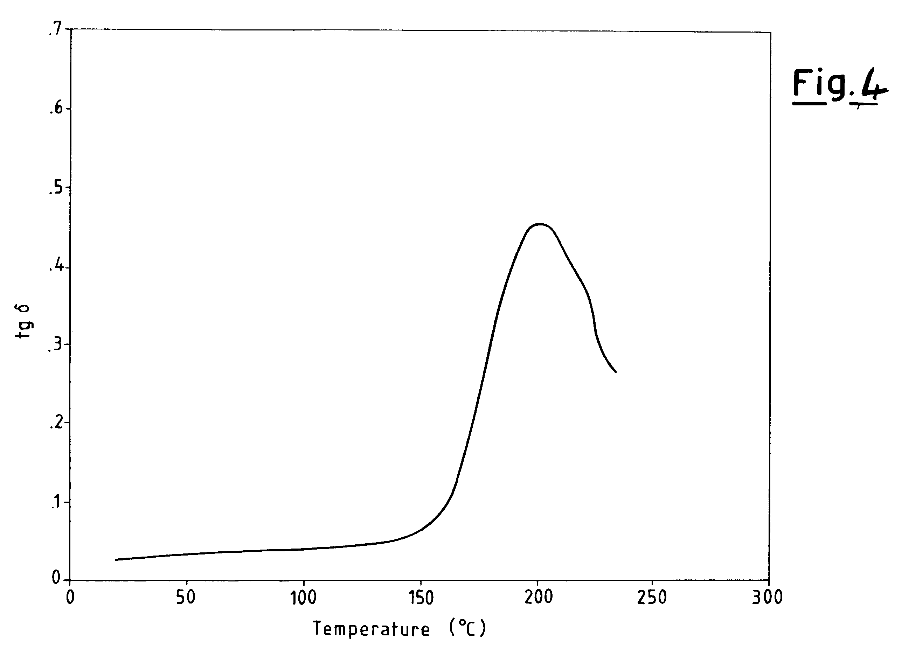

The curve of tan δ against temperature, evaluated by the Rheovibron dynamic-mechanical method (frequency 11 Hz) is shown in Figure 4.

Table 1 also shows the Tg of the material as evaluated by the Rheovibron dynamic-mechanical method at a frequency of 11 Hz.

The Tg is represented by the maximum point of the curve of tan δ against temperature.

EXAMPLE 5 (comparison)

50 parts by weight of PPE and 50 parts of a styrene/maleic anhydride copolymer (Dylark 132 produced by Arco Chemical) with a maleic anhydride content or 5.3 mol% were fed into a Brabender mechanical mixer. The mixture was melted and kept stirring for 5 minutes (T = 280 °C; rotor speed = 100 rpm).

The resultant product was cooled in water, dried, finely ground and compression-moulded (P = 40 kg/cm$^2$; T = 290 °C).

The composition and the Tg of the resultant material, determined by DSC, are shown in the accompanying Table 1.

EXAMPLE 6 (comparison)

50 parts of PPE and 50 parts of a mixture consisting of 47.5 parts of styrene and 2.5 parts of maleic anhydride (equivalent to 5 mol% on the monomers) were fed into a Brabender mechanical mixer.

The system was mixed under the same conditions as in Example 1.

The peroxide (tert-butylperbenzoate) was added as described in Example 1 in a quantity of 1% w/w on the monomers.

The composition and the Tg of the resultant material, determined by DSC, are shown in the accompanying Table 1.

EXAMPLE 7 (comparison)

50 parts of PPE and 50 parts of a mixture consisting of 47 parts of styrene and 3.0 parts of glycidylmethacrylate (equivalent to 5 mol% on the monomers) were fed into a mechanical mixer.

The system was mixed under the same conditions as in Example 1.

The peroxide (tert-butylperbenzoate) was added as described in Example 1 in a quantity of 1% w/w on the monomers.

The composition and the Tg of the resultant material, determined by DSC, are shown in the accompanying Table 1.

TABLE 1

| COMPONENTS | EX.1 | EX.2 | EX.3 |
|---|---|---|---|
| PPE (parts by weight) | 50 | 50 | 50 |

| | | | | |
|---|---|---|---|---|
| 1 Monomers (parts by weight): | | | | |
| 2 Styrene | 37.2 | 34.8 | | 35.0 |
| 3 EVB+DVB (1) | 11.8 | 11.5 | | 11.6 |
| 4 AM | 1.0 | | | |
| 5 NBA | | 3.7 | | |
| 6 NPMI | | | | |
| 7 THPA | | | | 3.4 |
| 8 TMPTMA | | | | |
| 9 EBODA | | | | |
| 10 GMA | | | | |
| SMA | | | | |
| Initiator (parts by weight) (2): | | | | |
| TBPB | 1 | 1 | | 1 |
| tg (DSC) (°C) (3) | 194 | 179 | | 187 |
| tg (Rheovibron) (°C) | 230 | 190 | | 204 |

TABLE 1 (continued)

| COMPONENTS | EX. | EX. 4 |
|---|---|---|
| PPE (parts by weight) | | 50 |
| 1 Monomers (parts by weight): | | |
| 2 Styrene | | 34.6 |
| 3 EVB+DVB (1) | | 11.5 |
| 4 AM | | |
| 5 NBA | | |
| 6 NPMI | | |

| | | | | |
|---|---|---|---|---|
| 7 THPA | | | | |
| 8 TMPTMA | | | | |
| 9 EBODA | | | 3.9 | |
| 10 GMA | | | | |
| SMA | | | | |
| Initiator (parts by weight) (2): | | | | |
| TBPB | | | 1 | |
| tg (DSC) (°C) (3) | | | 198 | |
| tg (Rheovibron) (°C) | | | 198 | |

TABLE 1 (continued)

| COMPONENTS | EX. | EX. 5 | EX. 6 | EX. 7 |
|---|---|---|---|---|
| PPE (parts by weight) | | 50 | 50 | 50 |
| 1 Monomers (parts by weight): | | | | |
| 2 Styrene | | 35.0 | 47.5 | 47 |
| 3 EVB+DVB (1) | | | | |
| 4 AM | | | 2.5 | |
| 5 NBA | | | | |
| 6 NPMI | | | | |
| 7 THPA | | | | |
| 8 TMPTMA | | | 22.4 | |
| 9 EBODA | | | | |
| 10 GMA | | | | 3.0 |
| SMA | | 50 | | |
| Initiator (parts by weight) (2): | | | | |

| | | | |
|---|---|---|---|
| TBPB | | 1 | 1 |
| tg (DSC) (°C) (3) | 145 | 149 | 148 |
| tg (Rheovibron) (°C) | | | |

Observations:

PPE = poly(2,6-dimethyl-1,4-phenylene ether);

EVB = ethylvinylbenzene; DVB = divinylbenzene;

AM = maleic anhydride; NBA = 5-norbornene-2,3-dicarboxyl anhydride; NPMI = N-phenylmaleimide;

THPA = 1,2,3,6-tetrahydrophthalic anhydride;

TMPTMA = trimethylolpropane trimethacrylate;

EBODA = endobicyclo(2,2,2)oct-5-ene-2,3-dicarboxylic anhydride;

GMA = glycidylmethacrylate; SMA = styrene/maleic anhydride copolymer; TBPB = tert-butylperbenzoate

NB:

(1) EVB/DVB mixture (1:1 by weight)

(2) parts by weight referred to monomers alone

(3) 2 by scanning (10°C/min from 50°C to 300°C)

## Claims

### Claims for the following Contracting States : AT, BE, CH, DE, DK, FR, GB, GR, IT, LI, LU, NL, SE

**1.** Toughenable polymer compositions cross-linkable thermally or by the effect of ultraviolet radiation, comprising:

a) at least 10% by weight of at least one polyphenylene ether represented by one of the following general formulas (I), (II), (III):

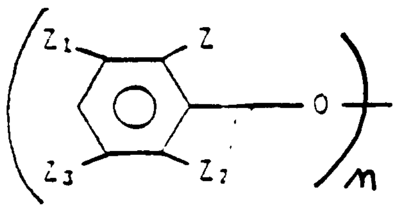

(I)

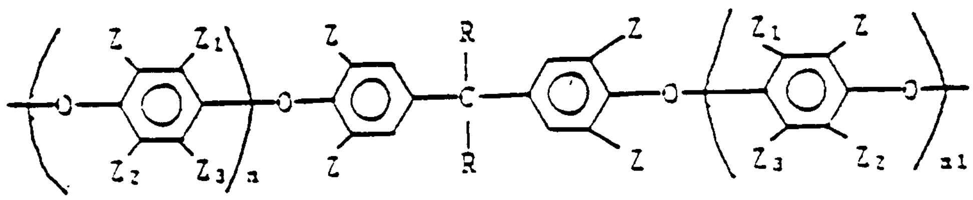

(II)

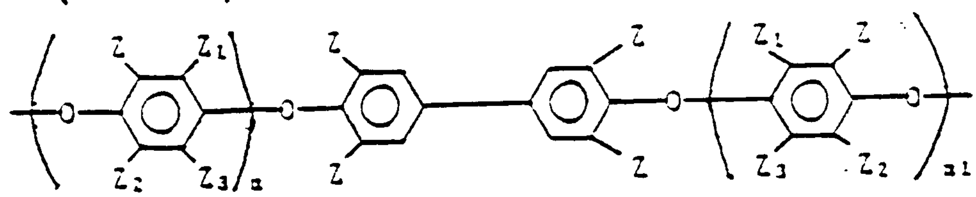

(III)

where Z, $Z_1$, $Z_2$, $Z_3$ are independently chosen from the group consisting of hydrogen, chlorine, bromine, fluorine, $C_1$-$C_4$ alkyl or substituted alkyl, n and $n_1$ are whole numbers independent of each other and having a value greater than 10, and R is hydrogen or a $C_1$-$C_4$ alkyl radical;

b) at least 10% by weight of a mixture of mono-unsaturated monomers consisting essentially of:

b1) from 1 to 97.38% by weight of at least one mono-unsaturated vinylaromatic monomer chosen from those of general formula:

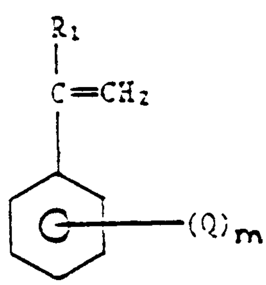

(IV)

where $R_1$ is hydrogen or a $C_1$-$C_4$ linear alkyl radical; Q is hydrogen, a halogen, a linear or branched $C_1$-$C_4$ alkyl radical or $-OCH_3$; m is a whole number between 1 and 5;

b2) from 0 to 99% by weight of at least one monomer containing vinyl-unsaturations and/or at least one (meth)acrylic monomer represented by the general formula (V):

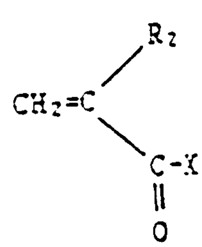

(V)

where X represents, independently, a hydroxyl radical or an $-OR_3$ radical; $R_2$ represents a hydrogen atom or a methyl radical; $R_3$ represents a $C_1$-$C_{20}$ linear or branched chain, a glycidyl group or a polyoxyethylene chain $(-CH_2CH_2O)_n-CH_2CH_2OR_4$ where n is a whole number between 0 and 20, and $R_4$ is hydrogen, a methyl radical or an amide group;

b3) from 2.62 to 99% by weight of an unsaturated compound selected from cyclic anhydrides, cyclic dianhydrides containing unsaturations able to (co)polymerize radicalically with the monomers $b_1$ and $b_2$, or an unsaturated compound deriving from the reaction between an unsaturated cyclic dianhydride and, respectively, ammonia, a primary- or a secondary amine;

b4) from 0 to 99% by weight of an unsaturated compound deriving from the reaction between an unsaturated cyclic dianhydride and, respectively, an alcohol, ammonia, a primary or secondary amine, or water;

c) from 1 to 80% by weight of a polyunsaturated monomer, and

d) from 0.01 to 10% by weight of one or more generators of radicals able to promote the thermal and/or U.V. polymerization of the monomers of components b) and c).

**2.** A polymer composition as claimed in claim 1, characterised in that the polyphenylene ether is poly(2,6-dimethyl-1,4-phenylene ether).

**3.** A polymer composition as claimed in the preceding claims, characterised in that the mono-unsaturated vinylaromatic monomer is styrene.

**4.** A polymer composition as claimed in the preceding claims, characterised in that the vinyl groups are chosen from the group consisting of vinylacetate, vinyl pivalate, vinyl propionate, vinyl versatate and vinyl pyrrolidone.

**5.** A polymer composition as claimed in the preceding claims, characterised in that the (meth)acrylic monomer of general formula (V) is chosen from those of the group comprising (meth)acrylic acid, methyl-, ethyl-, propyl-, butyl-acrylate and/or methacrylates, glycidyl(meth)acrylate, tetraethyleneglycolmonomethylether (meth)acrylate, acrylamide and methacrylamide.

**6.** A polymer composition as claimed in the preceding claims, characterised in that the unsaturated cyclic anhydride is cis-5-norbornene-endo-2,3-dicarboxylic anhydride.

**7.** A polymer composition as claimed in the preceding claims, characterised in that unsaturated cyclic anhydride is cis-1,2,3,6-tetrahydrophthalic anhydride.

**8.** A polymer composition as claimed in the preceding claims, characterised in that the unsaturated cyclic anhydride is bicyclo[2,2,2]oct-7-ene-2,3,5,6-tetracarboxylic dianhydride.

**9.** A polymer composition as claimed in the preceding claims, characterised in that the unsaturated cyclic anhydride is endo-bicyclo[2,2,2]oct-5-ene-2,3-dicarboxylic anhydride.

**10.** A polymer composition as claimed in the preceding claims, characterised in that the unsaturated cyclic anhydride is maleic anhydride.

**11.** A polymer composition as claimed in the preceding claims, characterised in that the unsaturated anhydride is vinylphthalic anhydride.

**12.** A polymer composition as claimed in the preceding claims, characterised in that the unsaturated cyclic anhydride derivatives pertain to the group consisting of diethylmaleate, monoethyl maleate, maleimide and phenylmaleimide.

**13.** A polymer composition as claimed in the preceding claims, characterised in that the polyunsaturated monomer is a polyunsaturated vinylaromatic compound corresponding to the general formula (XII):

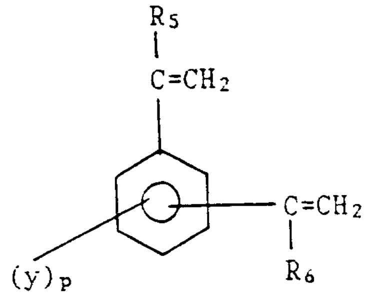

(XII)

where y is hydrogen, a halogen, a linear or branched $C_1$-$C_4$ alkyl, $-OCH_3$ or

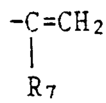

$R_5$, $R_6$, $R_7$ represent, independently of each other, hydrogen or a $C_1$-$C_4$ alkyl radical; and p is a whole number between 1 and 4.

**14.** A polymer composition as claimed in the preceding claims, characterised in that the polyunsaturated monomer is a polyacrylate corresponding to the general formula (XIII):

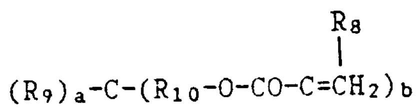

(XIII)

where $R_8$ represents a hydrogen atom or a methyl radical; $R_9$ represents a hydrogen atom or a linear or branched $C_1$-$C_{10}$ alkyl radical; $R_{10}$ represents a $C_1$-$C_3$ linear alkyl biradical; a and b are two whole numbers such that $a + b = 4$ and $b \geqq 2$.

**15.** A polymer composition as claimed in the preceding claims, characterised in that the polyunsaturated monomer is a polymaleimide corresponding to the general formula (XIV):

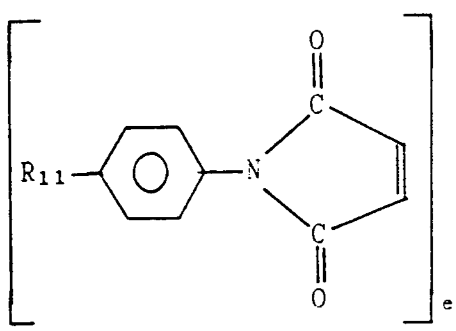

(XIV)

where $R_{11}$ represents an aliphatic, aromatic or alkylaromatic multiple radical and e is a whole number $\geqq$ 2.

**16.** A polymer composition as claimed in claim 13, characterised in that the polyunsaturated vinylaromatic compound is divinylbenzene.

**17.** A polymer composition as claimed in claim 13, characterised in that the vinylaromatic compound is trivinylbenzene.

**18.** A polymer composition as claimed in claim 14, characterised in that the polyacrylate pertains to the group comprising pentaerythritol tetraacrylate, pentaerythritol tetramethacrylate, 1,1,1-trimethylolpropane triacrylate, 1,1,1-trimethylolpropanetrimethacrylate.

**19.** A polymer composition as claimed in claim 15, characterized in that the polyphenylmaleimide is the bismaleimide having the following general formula (XV):

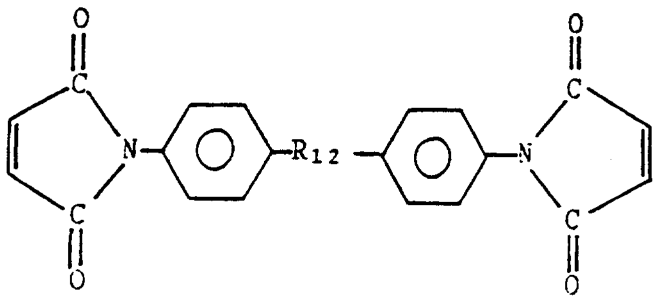

(XV)

where $R_{12}$ is a $C_1$-$C_{12}$ linear or branched aliphatic or cycloaliphatic biradical.

**20.** A polymer composition as claimed in the preceding claims, characterized in that the elastomeric (co)-polymer pertains to the group consisting of polybutadiene, polyisoprene, styrene-diene copolymer, acrylic rubber, nitrile rubber, butyl rubber, copolymers and terpolymers of alphaolefins (EPDM, EPR), and styrene-ethylene-butene copolymers.

**21.** Process for preparing a polymer composition as defined in Claim 1, comprising the steps of:
- dissolving the polyphenylene ether (component a) in a mixture of the components b) and c), and
- adding to the blend thus obtained the component d), optionally supplemented by additives.

**22.** Use of the polymer composition as defined in Claim 1 for producing plastics articles by moulding, press-injecting or spreading said polymer composition and cross-linking same by the agency of heat or U.V.radiations.

**23.** The plastics articles consisting of the cross-linked composition as defined in Claim 1 and optional fillers and additives.

**Claims for the following Contracting State : ES**

**1.** Process for preparing Toughenable polymer compositions cross-linkable thermally or by the effect of ultraviolet radiation, comprising:

a) at least 10% by weight of at least one polyphenylene ether represented by one of the following general formulas (I), (II), (III):

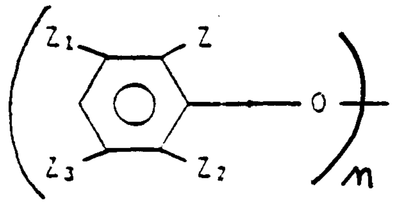

(I)

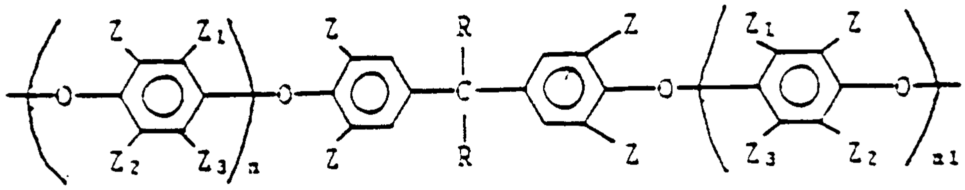

(II)

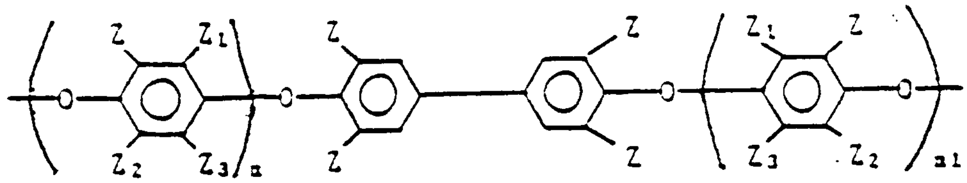

(III)

where Z, $Z_1$, $Z_2$, $Z_3$ are independently chosen from the group consisting of hydrogen, chlorine, bromine, fluorine, $C_1$-$C_4$ alkyl or substituted alkyl, n and $n_1$ are whole numbers independent of each other and having a value greater than 10, and R is hydrogen or a $C_1$-$C_4$ alkyl radical;

b) at least 10% by weight of a mixture of mono-unsaturated monomers consisting essentially of:

b1) from 1 to 97.38% by weight of at least one mono-unsaturated vinyl aromatic monomer chosen from those of general formula:

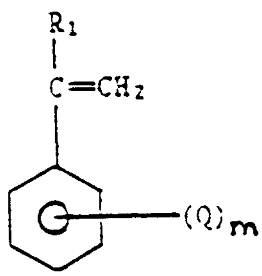

(IV)

where $R_1$ is hydrogen or a $C_1$-$C_4$ linear alkyl radical; Q is hydrogen, a halogen, a linear or branched $C_1$-$C_4$ alkyl radical or $-OCH_3$; m is a whole number between 1 and 5;

b2) from 0 to 99% by weight of at least one monomer containing vinyl-unsaturations and/or at least one (meth)acrylic monomer represented by the general formula (V):

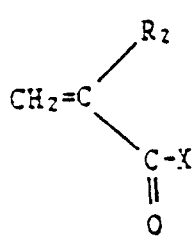

(V)

where X represents, independently, a hydroxyl radical or an $-OR_3$ radical; $R_2$ represents a hydrogen atom or a methyl radical; $R_3$ represents a $C_1$-$C_{20}$ linear or branched chain, a glycidyl group or a polyoxyethylene chain $(-CH_2CH_2O)_n-CH_2CH_2OR_4$ where n is a whole number between 0 and 20, and $R_4$ is hydrogen, a methyl radical or an amide group;

b3) from 2.62 to 99% by weight of an unsaturated compound selected from cyclic anhydrides, cyclic dianhydrides containing unsaturations able to (co)polymerize radicalically with the monomers $b_1$ and $b_2$, or an unsaturated compound deriving from the reaction between an unsaturated cyclic dianhydride and, respectively, ammonia, a primary- or a secondary amine;

b4) from 0 to 99% by weight of an unsaturated compound deriving from the reaction between an unsaturated cyclic dianhydride and, respectively, an alcohol, ammonia, a primary or secondary amine, or water;

c) from 1 to 80% by weight of a polyunsaturated monomer, and

d) from 0.01 to 10% by weight of one or more generators of radicals able to promote the thermal and/or U.V. polymerization of the monomers of components b) and c);

characterized by comprising the steps of:

- dissolving the polyphenylene ether (component a) in a mixture of the components b) and c), and
- adding to the blend thus obtained the component d), optionally supplemented by additives.

**2.** A process as claimed in claim 1, characterised in that the polyphenylene ether is poly(2,6-dimethyl-1,4-phenylene ether).

**3.** A process as claimed in the preceding claims, characterised in that the mono-unsaturated vinylaromatic monomer is styrene.

**4.** A process as claimed in the preceding claims, characterised in that the vinyl groups are chosen from the group consisting of vinylacetate, vinyl pivalate, vinyl propionate, vinyl versatate and vinyl pyrrolidone.

**5.** A process as claimed in the preceding claims, characterised in that the (meth)acrylic monomer of general formula (V) is chosen from those of the group comprising (meth)acrylic acid, methyl-, ethyl-, propyl-, butyl-acrylate and/or methacrylates, glycidyl(meth)acrylate, tetraethyleneglycolmonomethylether (meth)acrylate, acrylamide and methacrylamide.

**6.** A process as claimed in the preceding claims, characterised in that the unsaturated cyclic anhydride is cis-5-norbornene-endo-2,3-dicarboxylic anhydride (VI).

**7.** A process as claimed in the preceding claims, characterised in that unsaturated cyclic anhydride is cis-1,2,3,6-tetrahydrophthalic anhydride (VII).

**8.** A process as claimed in the preceding claims, characterised in that the unsaturated cyclic anhydride is bicyclo[2,2,2]oct-7-ene-2,3,5,6-tetracarboxylic dianhydride.

**9.** A process as claimed in the preceding claims, characterised in that the unsaturated cyclic anhydride is endo-bicyclo[2,2,2]oct-5-ene-2,3-dicarboxylic anhydride.

**10.** A process as claimed in the preceding claims, characterised in that the unsaturated cyclic anhydride is maleic anhydride (X).

**11.** A process as claimed in the preceding claims, characterised in that the unsaturated anhydride is vinylphthalic anhydride (XI).

**12.** A process as claimed in the preceding claims, characterised in that the unsaturated cyclic anhydride derivatives pertain to the group consisting of diethylmaleate, monoethyl maleate, maleimide and phenylmaleimide.

**13.** A process as claimed in the preceding claims, characterised in that the polyunsaturated monomer is a polyunsaturated vinylaromatic compound corresponding to the general formula (XII):

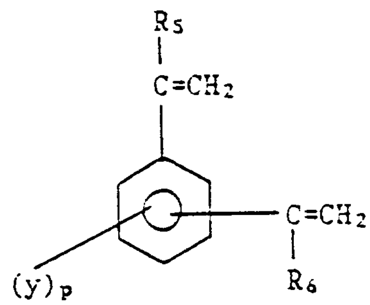

(XII)

where y is hydrogen, a halogen, a linear or branched $C_1$-$C_4$ alkyl, $-OCH_3$ or

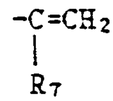

$R_5$, $R_6$, $R_7$ represent, independently of each other, hydrogen or a $C_1$-$C_4$ alkyl radical; and p is a whole number between 1 and 4.

**14.** A process as claimed in the preceding claims, characterized in that the polyunsaturated monomer is a polyacrylate corresponding to the general formula (XIII):

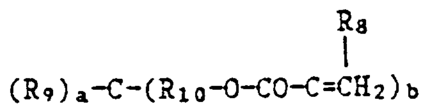

(XIII)

where $R_8$ represents a hydrogen atom or a methyl radical; $R_9$ represents a hydrogen atom or a linear or branched $C_1$-$C_{10}$ alkyl radical; $R_{10}$ represents a $C_1$-$C_3$ linear alkyl biradical; a and b are two whole numbers such that $a + b = 4$ and $b \geqq 2$.

**15.** A process as claimed in the preceding claims, characterised in that the polyunsaturated monomer is a polymaleimide corresponding to the general formula (XIV):

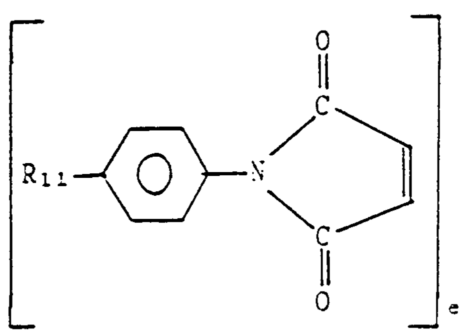

(XIV)

where $R_{11}$ represents an aliphatic, aromatic or alkylaromatic multiple radical and e is a whole number $\geqq$ 2.

**16.** A process as claimed in claim 13, characterised in that the polyunsaturated vinylaromatic compound is divinylbenzene.

**17.** A process as claimed in claim 13, characterised in that the vinylaromatic compound is trivinylbenzene.

**18.** A process as claimed in claim 14, characterised in that the polyacrylate pertains to the group comprising pentaerythritol tetraacrylate, pentaerythritol tetramethacrylate, 1,1,1-trimethylolpropane

triacrylate, 1,1,1-trimethylolpropanetrimethacrylate.

**19.** A process as claimed in claim 15, characterized in that the polyphenylmaleimide is the bismaleimide having the following general formula (XV):

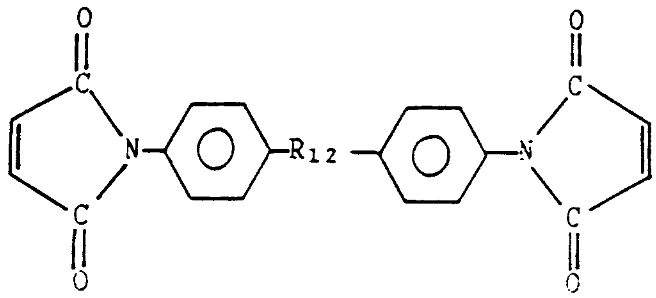

(XV)

where $R_{12}$ is a $C_1$-$C_{12}$ linear or branched aliphatic or cycloaliphatic biradical.

**20.** A process as claimed in the preceding claims, characterized in that the elastomeric (co)polymer pertains to the group consisting of polybutadiene, polyisoprene, styrene-diene copolymer, acrylic rubber, nitrile rubber, butyl rubber, copolymers and terpolymers of alphaolefins (EPDM, EPR), and styrene-ethylene-butene copolymers.

**21.** The plastics articles consisting of the cross-linked composition as prepared in Claim 1 and optional fillers and additives.

**Patentansprüche**
**Patentansprüche für folgende Vertragsstaaten : AT, BE, CH, DE, DK, FR, GB, GR, IT, LI, LU, NL, SE**

**1.** Härtbare, thermisch oder durch die Einwirkung ultravioletter Strahlung vernetzbare Polymerzusammensetzungen, umfassend:

a) wenigstens 10 Gew.-% wenigstens eines Polyphenylenethers, dargestellt durch eine der nachstehenden allgemeinen Formeln (I), (II) und (III):

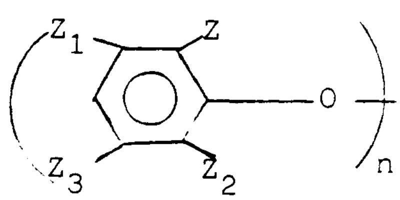

(I)

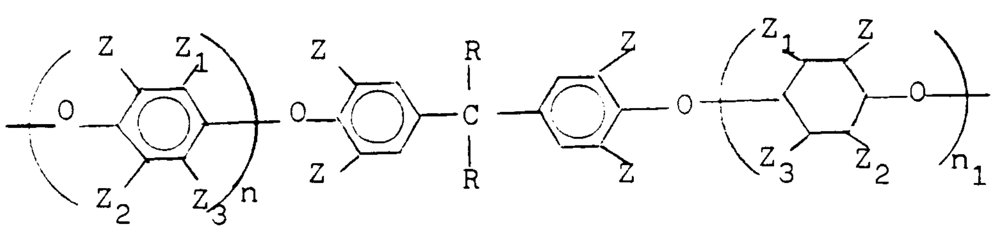

(II)

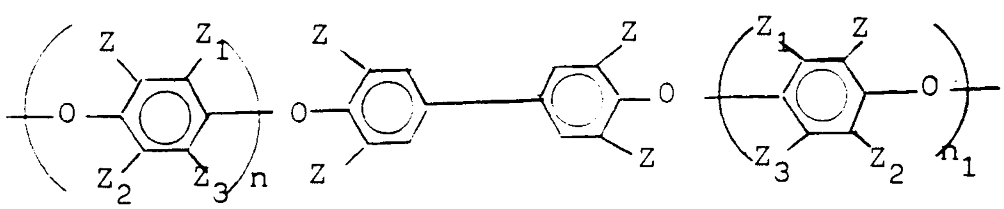

(III),

worin Z, $Z_1$, $Z_2$, $Z_3$ unabhängig voneinander aus der aus Wasserstoff, Chlor, Brom, Fluor, $C_1$-$C_4$-Alkyl oder substituiertem Alkyl bestehenden Gruppe ausgewählt sind, n und $n_1$ ganze, voneinander

unabhängige Zahlen sind und einen Wert größer als 10 aufweisen und R Wasserstoff oder einen $C_1$-$C_4$-Alkylrest bedeutet;

b) wenigstens 10 Gew.-% eines Gemisches aus einfach ungesättigten Monomeren, im wesentlichen bestehend aus:

b1) 1 bis 97,38 Gew.-% wenigstens eines einfach ungesättigten vinylaromatischen Monomers, ausgewählt unter jenen mit der allgemeinen Formel:

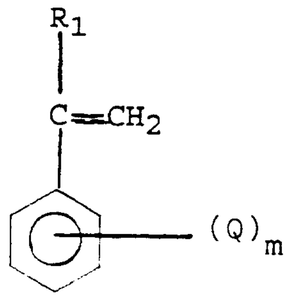

(IV),

worin $R_1$ für Wasserstoff oder einen geraden $C_1$-$C_4$-Alkylrest steht; Q Wasserstoff, Halogen, einen geraden oder verzweigten $C_1$-$C_4$-Alkylrest oder $-OCH_3$ darstellt; m eine ganze Zahl von 1 bis 5 ist;

b2) 0 bis 99 Gew.-% wenigstens eines Vinylunsättigungen enthaltenden Monomers und/oder wenigstens eines (Meth)acrylmonomers, dargestellt durch die allgemeinen Formel (V):

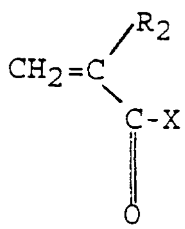

(V),

worin X unabhängig voneinander einen Hydroxylrest oder einen $-OR_3$-Rest darstellt; $R_2$ für ein Wasserstoffatom oder einen Methylrest steht; $R_3$ ein gerade oder verzweigte $C_1$-$C_{20}$-Kette, eine Glycidylgruppe oder eine Polyoxyethylenkette $(-CH_2CH_2O)_n-CH_2CH_2OR_4$ bedeutet, worin n eine ganze Zahl von 0 bis 20 ist und $R_4$ für Wasserstoff, einen Methylrest oder eine Amidgruppe steht;

b3) 2,62 bis 99 Gew.-% einer ungesättigten, unter cyclischen Anhydriden und cyclischen Dianhydri-den ausgewählten Verbindung, die zum radikali-schen (Co)polymerisieren mit den Monomeren $b_1$ und $b_2$ befähigte Unsättigungsstellen enthält, oder einer von der Umsetzung zwischen einem ungesättigten cyclischen Dianhydrid und Ammoniak, einem primären bzw. einem sekundären Amin abgeleiteten Verbindung;

b4) 0 bis 99 Gew.-% einer ungesättigten, aus der Reaktion zwischen einem ungesättigten cyclischen Dianhydrid und einem Alkohol, Ammoniak, einem primären oder sekundären Amin bzw. Wasser stammenden Verbindung;

c) 1 bis 80 Gew.-% eines mehrfach ungesättigten Monomers und

d) 0,01 bis 10 Gew.-% eines oder mehrerer Radikalbildner, die die thermische und/oder UV-Polymerisation der Monomeren der Komponenten b) und c) fördern können.

**2.** Polymerzusammensetzung nach Anspruch 1, dadurch gekennzeichnet, daß der Polyphenylenether Poly(2,6-dimethyl-1,4-phenylen-ether) ist.

**3.** Polymerzusammensetzung nach den vorstehenden Ansprüchen, dadurch gekennzeichnet, daß das einfach ungesättigte vinylaromatische Monomer Styrol ist.

**4.** Polymerzusammensetzung nach den vorstehenden Ansprüchen, dadurch gekennzeichnet, daß die Vinylgruppen aus der aus Vinylacetat, Vinylpivalat, Vinylpropionat, Vinylversatat und Vinylpyrrolidon

bestehenden Gruppe ausgewählt werden.

**5.** Polymerzusammensetzung nach den vorstehenden Ansprüchen, dadurch gekennzeichnet, daß das (Meth)acrylmonomer der allgemeinen Formel (V) unter jenen aus der Gruppe ausgewählt wird, die (Meth)acrylsäure, Methyl-, Ethyl-,Propyl-, Butylacrylat und/oder Methacrylate, Glycidyl(meth)acrylat, Tetraethylenglykolmonomethylether(meth)acrylat, Acrylamid und Methacrylamid umfaßt.

**6.** Polymerzusammensetzung nach den vorstehenden Ansprüchen, dadurch gekennzeichnet, daß das ungesättigte cyclische Anhydrid cis-5-Norbornen-endo-2,3-dicarbonsäureanhydrid ist.

**7.** Polymerzusammensetzung nach den vorstehenden Ansprüchen, dadurch gekennzeichnet, daß das ungesättigte cyclische Anhydrid cis-1,2,3,6-Tetrahydrophthalsäureanhydrid ist.

**8.** Polymerzusammensetzung nach den vorstehenden Ansprüchen, dadurch gekennzeichnet, daß das ungesättigte cyclische Anhydrid Bicyclo[2,2,2]oct-7-en-2,3,5,6-tetracarbonsäuredianhydrid ist.

**9.** Polymerzusammensetzung nch den vorstehenden Ansprüchen, dadurch gekennzeichnet, daß das ungesättigte cyclische Anhydrid endo-Bicyclo[2,2,2]oct-5-en-2,3-dicarbonsäureanhydrid ist.

**10.** Polymerzusammensetzung nach den vorstehenden Ansprüchen, dadurch gekennzeichnet, daß das ungesättigte cyclische Anhydrid Maleinsäureanhydrid ist.

**11.** Polymerzusammensetzung nach den vorstehenden Ansprüchen, dadurch gekennzeichnet, daß das ungesättigte Anhydrid Vinylphthalsäureanhydrid ist.

**12.** Polymerzusammensetzung nach den vorstehenden Ansprüchen,da durch gekennzeichnet, daß die ungesättigten cyclischen Anhydridderivate zu der aus Diethylmaleat, Monoethylmaleat, Maleimid und Phenylmaleimid bestehenden Gruppe gehören.

**13.** Polymerzusammensetzung nach den vorstehenden Ansprüchen, dadurch gekennzeichnet, daß das mehrfach ungesättigte Monomer eine mehrfach ungesättige vinylaromatische Verbindung ist, entsprechend der allgemeinen Formel (XII):

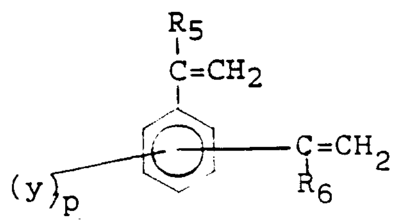

(XII),

worin y für Wasserstoff, Halogen, gerades oder verzweigtes $C_1$-$C_4$-Alkyl, $OCH_3$ oder

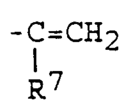

steht, $R_5$, $R_6$ und $R_7$ unabhängig voneinander Wasserstoff oder einen $C_1$-$C_4$-Alkylrest bedeuten und p eine ganze Zahl von 1 bis 4 ist.

**14.** Polymerzusammensetzung nach den vorstehenden Ansprüchen, dadurch gekennzeichnet, daß das mehrfach ungesättigte Monomer ein Polyacrylat entsprechend der allgemeinen Formel (XIII):

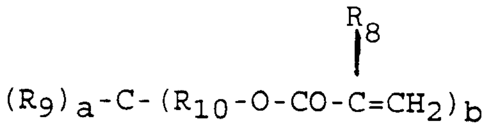

(XIII)

ist, worin $R_8$ ein Wasserstoffatom oder einen Methylrest bedeutet; $R_9$ ein Wasserstoffatom oder einen geraden oder verzweigten $C_1$-$C_{10}$Alkylrest darstellt; $R_{10}$ einen geraden zweiwertigen $C_1$-$C_3$Alkylrest bezeichnet; a und b zwei solche ganze Zahlen sind, daß $a + b = 4$ und $b \geqq 2$ sind.

**15.** Polymerzusammensetzung nach den vorstehenden Ansprüchen, dadurch gekennzeichnet, daß das mehrfach ungesättigte Monomer ein Polymaleimid entsprechend der allgemeinen Formel (XIV):

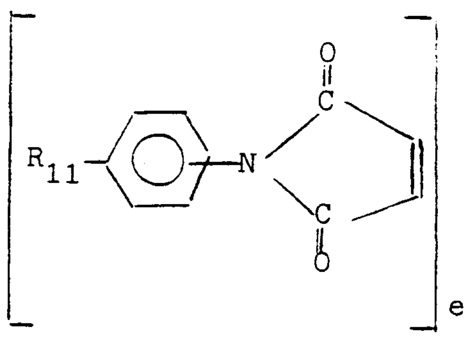

(XIV)

ist, worin $R_{11}$ einen aliphatischen, aromatischen oder alkylaromatischen mehrwertigen Rest darstellt und e eine ganze Zahl $\geqq 2$ ist.

**16.** Polymerzusammensetzung nach Anspruch 13, dadurch gekennzeichnet, daß die mehrfach ungesättigte vinylaromatische Verbindung Divinylbenzol ist.

**17.** Polymerzusammensetzung nach Anspruch 13, dadurch gekennzeichnet, daß die vinylaromatische Verbindung Trivinylbenzol ist.

**18.** Polymerzusammensetzung nach Anspruch 14, dadurch gekennzeichnet, daß das Polyacrylat zu der Pentaerythrittetraacrylat, Pentaerythrittetramethacrylat, 1,1,1-Trimethylolpropantriacrylat,1,1,1-Trimethylolpropantrimethacrylat umfassenden Gruppe gehört.

**19.** Polymerzusammensetzung nach Anspruch 15, dadurch gekennzeichnet, daß das Polyphenylmaleimid das Bismaleimid mit der nachstehenden allgemeinen Formel (XV):

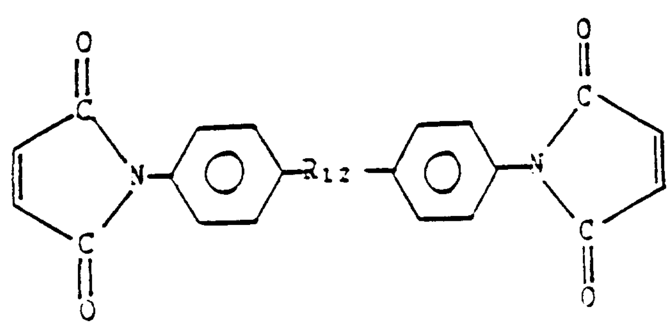

(XV)

ist, worin $R_{12}$ einen geraden oder verzweigten, aliphatischen oder cycloaliphatischen zweiwertigen $C_1$-$C_{12}$-Rest bezeichnet.

**20.** Polymerzusammensetzung nach den vorstehenden Ansprüchen, dadurch gekennzeichnet, daß das elastomere (Co)polymer zu der aus Polybutadien, Polyisopren, Styrol-Dien-Copolymer, Acrylkautschuk, Nitrilkautschuk, Butylkautschuk, Copolymeren und Terpolymeren von alpha-Olefinen (EPDM, EPR) und Styrol-Ethylen-Buten-Copolymeren bestehenden Gruppe gehört.

**21.** Verfahren zur Herstellung einer Polymerzusammensetzung nach Anspruch 1, umfassend die Stufen des:
- Auflösens des Polyphenylenethers (Komponente a) in einem Gemisch aus den Komponenten b) und c) und
- Zusetzen der Komponente d) zu dem so erhaltenen Gemisch, gewünschtenfalls ergänzt durch Additive.

**22.** Verwendung der in Anspruch 1 definierten Polymerzusammensetzung zur Herstellung von Kunststoffgegenständen durch Formen, Druckgießen oder Ausbreiten der Polymerzusammensetzung und Vernetzen derselben durch Einwirkung von Hitze oder UV-Strahlung.

**23.** Kunststoffgegenstände, bestehend aus der vernetzten Zusammensetzung gemäß Definition im Anspruch 1 und gegebenenfalls Füllstoffen und Additiven.

**Patentansprüche für folgenden Vertragsstaat : ES**

**1.** Verfahren zur Herstellung härtbarer, thermisch oder durch die Einwirkung ultravioletter Strahlung vernetzbarer Polymerzusammensetzungen, umfassend:

a) wenigstens 10 Gew.-% wenigstens eines Polyphenylenethers, dargestellt durch eine der nachstehenden allgemeinen Formeln (I), (II) und (III):

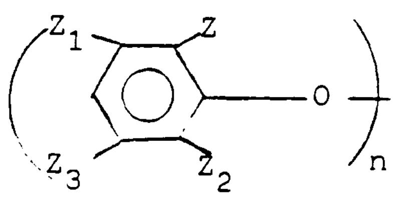

(I)

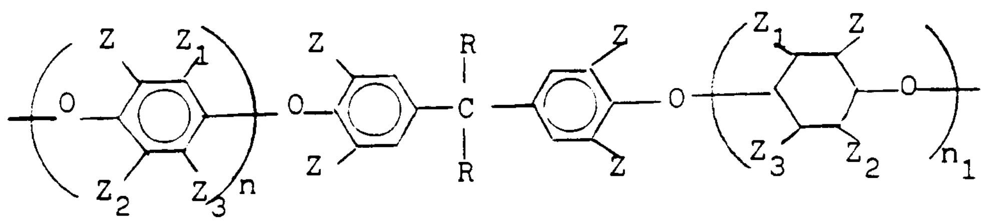

(II)

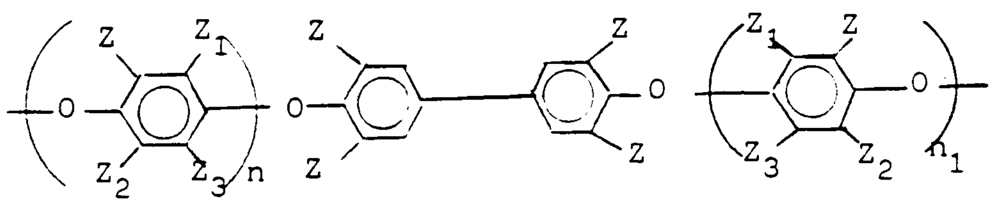

(III),

worin Z, $Z_1$, $Z_2$, $Z_3$ unabhängig voneinander aus der aus Wasserstoff, Chlor, Brom, Fluor, $C_1$-$C_4$-Alkyl oder substituiertem Alkyl bestehenden Gruppe ausgewählt sind, n und $n_1$ ganze, voneinander unabhängige Zahlen sind und einen Wert größer als 10 aufweisen und R Wasserstoff oder einen $C_1$-$C_4$-Alkylrest bedeutet;

b) wenigstens 10 Gew.-% eines Gemisches aus einfach ungesättigten Monomeren, im wesentlichen bestehend aus:

b1) 1 bis 97,38 Gew.-% wenigstens eines einfach ungesättigten vinylaromatischen Monomers, ausgewählt unter jenen mit der allgemeinen Formel:

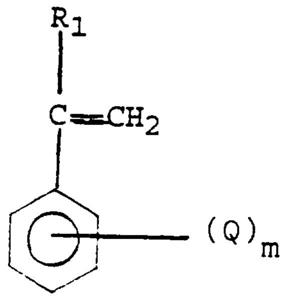

(IV),

worin $R_1$ für Wasserstoff oder einen geraden $C_1$-$C_4$-Alkylrest steht; Q Wasserstoff, Halogen, einen geraden oder verzweigten $C_1$-$C_4$-Alkylrest oder $-OCH_3$ darstellt; m eine ganze Zahl von 1 bis 5 ist;

b2) 0 bis 99 Gew.-% wenigstens eines Vinylunsättigungen enthaltenden Monomers und/oder wenigstens eines (Meth)acrylmonomers, dargestellt durch die allgemeinen Formel (V):

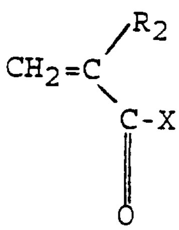

(V),

worin X unabhängig voneinander einen Hydroxylrest oder einen $-OR_3$-Rest darstellt; $R_2$ für ein Wasserstoffatom oder einen Methylrest steht; $R_3$ ein gerade oder verzweigte $C_1$-$C_{20}$-Kette, eine Glycidylgruppe oder eine Polyoxyethylenkette $(-CH_2CH_2O)_n-CH_2CH_2OR_4$ bedeutet, worin n eine ganze Zahl von 0 bis 20 ist und $R_4$ für Wasserstoff, einen Methylrest oder eine Amidgruppe steht;

b3) 2,62 bis 99 Gew.-% einer ungesättigten, unter cyclischen Anhydriden und cyclischen Dianhydri-den ausgewählten Verbindung, die zum radikali-schen (Co)polymerisieren mit den Monomeren $b_1$ und $b_2$ befähigte Unsättigungsstellen enthält, oder einer von der Umsetzung zwischen einem ungesättigten cyclischen Dianhydrid und Ammoniak, einem primären bzw. einem sekundären Amin abgeleiteten Verbindung;

b4) 0 bis 99 Gew.-% einer ungesättigten, aus der Reaktion zwischen einem ungesättigten cyclischen Di- oder sekundären Amin bzw. Wasser stammenden Verbindung;

c) 1 bis 80 Gew.-% eines mehrfach ungesättigten Monomers und

d) 0,01 bis 10 Gew.-% eines oder mehrerer Radikalbildner, die die thermische und/oder UV-Polymerisation der Monomeren der Komponenten b) und c) fördern können;

dadurch gekennzeichnet, daß es die Stufen des:

- Auflösens des Polyphenylenethers (Komponente a) in einem Gemisch aus den Komponenten b) und c) und
- Zusetzen der Komponente d) zu dem so erhaltenen Gemisch, gewünschtenfalls ergänzt durch Additive,

umfaßt.

2. Verfahren nach Anspruch 1, dadurch gekennzeichnet, daß der Polyphenylenether Poly(2,6-dimethyl-1,4-phenylen-ether) ist.

3. Verfahren nach den vorstehenden Ansprüchen, dadurch gekennzeichnet, daß das einfach ungesättigte vinylaromatische Monomer Styrol ist.

4. Verfahren nach den vorstehenden Ansprüchen, dadurch gekennzeichnet, daß die Vinylgruppen aus der aus Vinylacetat, Vinylpivalat, Vinylpropionat, Vinylversatat und Vinylpyrrolidon bestehenden Gruppe ausgewählt werden.

**5.** Verfahren nach den vorstehenden Ansprüchen, dadurch gekennzeichnet, daß das (Meth)acrylmonomer der allgemeinen Formel (V) unter jenen aus der Gruppe ausgewählt wird, die (Meth)acrylsäure, Methyl-, Ethyl-,Propyl-, Butylacrylat und/oder Methacrylate, Glycidyl(meth)acrylat, Tetraethylenglykolmonomethylether(meth)acrylat, Acrylamid und Methacrylamid umfaßt.

**6.** Verfahren nach den vorstehenden Ansprüchen, dadurch gekennzeichnet, daß das ungesättigte cyclische Anhydrid cis-5-Norbornen-endo-2,3-dicarbonsäureanhydrid ist.

**7.** Verfahren nach den vorstehenden Ansprüchen, dadurch gekennzeichnet, daß das ungesättigte cyclische Anhydrid cis-1,2,3,5-Tetrahydrophthalsäureanhydrid ist.

**8.** Verfahren nach den vorstehenden Ansprüchen, dadurch gekennzeichnet, daß das ungesättigte cyclische Anhydrid Bicyclo[2,2,2]oct-7-en-2,3,5,6-tetracarbonsäuredianhydrid ist.

**9.** Verfahren nach den vorstehenden Ansprüchen, dadurch gekennzeichnet, daß das ungesättigte cyclische Anhydrid endo-Bicyclo[2,2,2]oct-5-en-2,3-dicarbonsäureanhydrid ist.

**10.** Verfahrenn nach den vorstehenden Ansprüchen, dadurch gekennzeichnet, daß das ungesättigte cyclische Anhydrid Maleinsäureanhydrid ist.

**11.** Verfahren nach den vorstehenden Ansprüchen, dadurch gekennzeichnet, daß das ungesättigte Anhydrid Vinylphthalsäureanhydrid ist.

**12.** Verfahren nach den vorstehenden Ansprüchen, dadurch gekennzeichnet, daß die ungesättigten cyclischen Anhydridderivate zu der aus Diethylmaleat, Monoethylmaleat, Maleimid und Phenylmaleimid bestehenden Gruppe gehören.

**13.** Verfahren nach den vorstehenden Ansprüchen, dadurch gekennzeichnet, daß das mehrfach ungesättigte Monomer eine mehrfach ungesättige vinylaromatische Verbindung ist, entsprechend der allgemeinen Formel (XII):

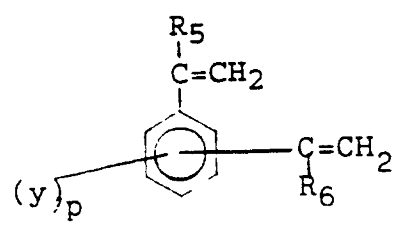

(XII),

worin y für Wasserstoff, Halogen, gerades oder verzweigtes $C_1$-$C_4$-Alkyl, $OCH_3$ oder

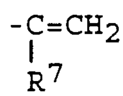

steht, $R_5$, $R_6$ und $R_7$ unabhängig voneinander Wasserstoff oder einen $C_1$-$C_4$-Alkylrest bedeuten und p eine ganze Zahl von 1 bis 4 ist.

**14.** Verfahren nach den vorstehenden Ansprüchen, dadurch gekennzeichnet, daß das mehrfach ungesättigte Monomer ein Polyacrylat entsprechend der allgemeinen Formel (XIII):

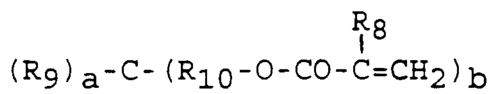

(XIII)

ist, worin $R_8$ ein Wasserstoffatom oder einen Methylrest bedeutet; $R_9$ ein Wasserstoffatom oder einen

geraden oder verzweigten $C_1$-$C_{10}$Alkylrest darstellt; $R_{10}$ einen geraden zweiwertigen $C_1$-$C_3$Alkylrest bezeichnet; a und b zwei solche ganze Zahlen sind, daß $a+b=4$ und $b \geqq 2$ sind.

**15.** Verfahren nach den vorstehenden Ansprüchen, dadurch gekennzeichnet, daß das mehrfach ungesättigte Monomer ein Polymaleimid entsprechend der allgemeinen Formel (XIV):

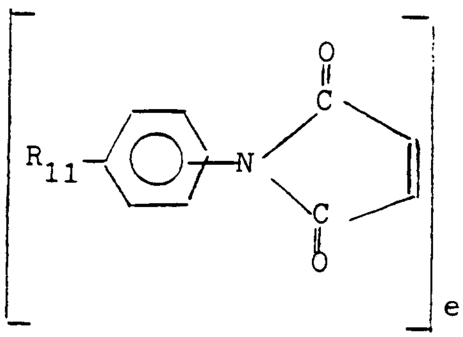

(XIV)

ist, worin $R_{11}$ einen aliphatischen, aromatischen oder alkylaromatischen mehrwertigen Rest darstellt und e eine ganze Zahl $\geqq 2$ ist.

**16.** Verfahren nach Anspruch 13, dadurch gekennzeichnet, daß die mehrfach ungesättigte vinylaromatische Verbindung Divinylbenzol ist.

**17.** Verfahren nach Anspruch 13, dadurch gekennzeichnet, daß die vinylaromatische Verbindung Trivinylbenzol ist.

**18.** Verfahren nach Anspruch 14, dadurch gekennzeichnet, daß das Polyacrylat zu der Pentaerythrittetraacrylat, Pentaerythrittetramethacrylat,1,1,1-Trimethylolpropantriacrylat,1,1,1-Trimethylolpropantrimethacrylat umfassenden Gruppe gehört.

**19.** Verfahren nach Anspruch 15, dadurch gekennzeichnet, daß das Polyphenylmaleimid das Bismaleimid mit der nachstehenden allgemeinen Formel (XV):

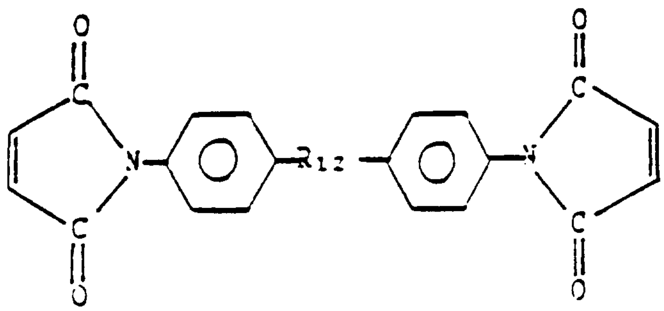

(XV)

ist, worin $R_{12}$ einen geraden oder verzweigten, aliphatischen oder cycloaliphatischen zweiwertigen $C_1$-$C_{12}$-Rest bezeichnet.

**20.** Verfahren nach den vorstehenden Ansprüchen, dadurch gekennzeichnet, daß das elastomere (Co)-polymer zu der aus Polybutadien, Polyisopren, Styrol-Dien-Copolymer, Acrylkautschuk, Nitrilkautschuk, Butylkautschuk, Copolymeren und Terpolymeren von alpha-Olefinen (EPDM, EPR) und Styrol-Ethylen-Buten-Copolymeren bestehenden Gruppe gehört.

**21.** Kunststoffgegenstände, bestehend aus der vernetzten Zusammensetzung, wie in Anspruch 1 hergestellt, und gegebenenfalls aus Füllstoffen und Additiven.

**Revendications**

**Revendications pour les Etats contractants suivants : AT, BE, CH, DE, DK, FR, GB, GR, IT, LI, LU, NL, SE**

**1.** Composition polymère durcissable réticulable thermiquement ou par l'action des radiations UV, comprenant :

a) au moins 10 % en poids d'au moins un poly(phénylène éther) représenté par une des formules générales suivantes (I), (II) et (III)

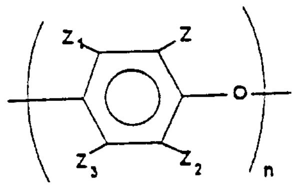
(I)

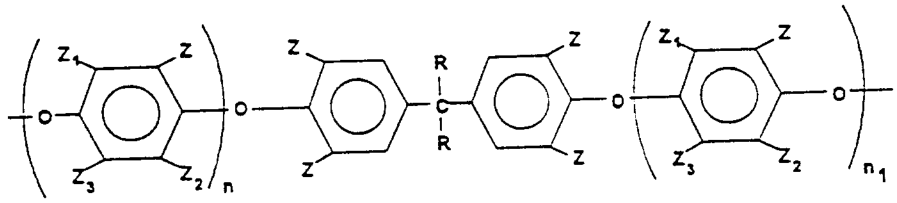
(II)

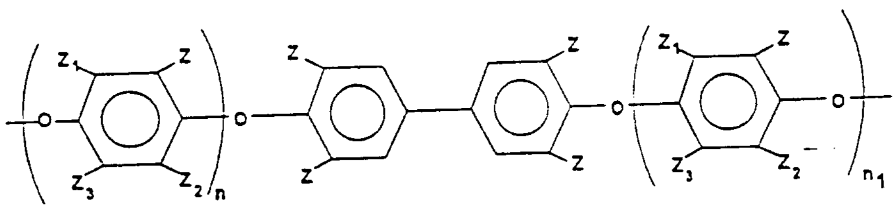
(III)

dans lesquelles Z, $Z_1$, $Z_2$, $Z_3$, sont indépendamment choisis dans le groupe constitué par l'hydrogène, le chlore, le brome, le fluor, un groupe alkyle en $C_1$-$C_4$ ou un groupe alkyle substitué, n et $n_1$ sont indépendamment des nombres entiers supérieurs à 10 et R représente un atome d'hydrogène ou un groupe alkyle en $C_1$-$C_4$;

b) au moins 10 % en poids d'un mélange de monomères monoinsaturés constitué essentiellement de :

$b_1$) de 1 à 97,38 % en poids d'au moins un monomère vinylique aromatique monoinsaturé choisi parmi ceux représentés par la formule générale :

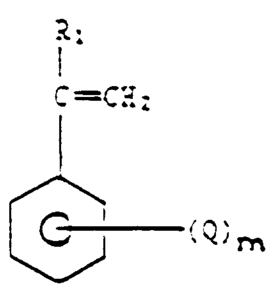
(IV)

dans laquelle $R_1$ représente un atome d'hydrogène ou un groupe alkyle linéaire en $C_1$-$C_4$, Q représente un atome d'hydrogène, d'halogène, un groupe alkyle linéaire ou ramifié en $C_1$-$C_4$, ou un groupe $-OCH_3$, m est un nombre entier entre 1 et 5;

$b_2$) de 0 à 99 % en poids d'au moins un monomère contenant des insaturations vinyliques et/ou au moins un monomère (méth)acrylique représenté par la formule générale (V) :

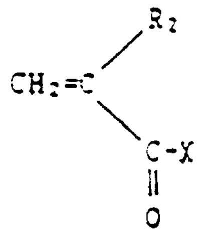

(V)

dans laquelle X représente indépendamment un groupe hydroxyle ou un groupe $-OR_3$, $R_2$ représente un atome d'hydrogène ou un groupe méthyle, $R_3$ représente une chaîne linéaire ou ramifiée en $C_1$-$C_{20}$, un groupe glycidyle ou une chaîne de poly(oxyéthylène) $(-CH_2CH_2O)_n-CH_2CH_2OR_4$, dans laquelle n est un nombre entier entre 0 et 20 et $R_4$ représente un atome d'hydrogène, un groupe méthyle ou amide;

$b_3$) de 2,62 à 99 % en poids d'un composé insaturé choisi parmi les anhydrides cycliques, les anhydrides cycliques comportant des insaturations capables d'être (co)polymérisées par voie radicalaire avec les monomères $b_1$ ou $b_2$,, ou un composé insaturé issu de la réaction entre un dianhydride cyclique insaturé et, respectivement, un alcool, l'ammoniaque, une amine primaire ou secondaire.

$b_4$) de 0 à 99 % en poids d'un composé insaturé issu de la réaction entre un dianhydride cyclique insaturé et, respectivement, un alcool, l'ammoniaque, une amine primaire ou secondaire ou l'eau;

c) de 1 à 80 % en poids d'un monomère polyinsaturé, et

d) de 0,01 à 10 % en poids d'un ou de plusieurs générateurs de radicaux capables d'amorcer la polymérisation thermique et/ou par UV des monomères des composants b) et c).

**2.** Composition polymère conforme à la revendication 1, caractérisée en ce que le poly(oxyphénylène) est le poly(2,6-diméthyl-1,4-phénylèneéther).

**3.** Composition polymère conforme aux revendications précédentes, caractérisée en ce que le monomère vinylique aromatique monoinsaturé est le styrène.

**4.** Composition de polymère conforme aux revendications précédentes, caractérisée en ce que les groupes vinyle sont choisis parmi l'acétate de vinyle, le pivalate de vinyle, le propionate de vinyle, le versatate de vinyle et la vinylpyrrolidone.

**5.** Composition polymère conforme aux revendications précédentes, caractérisée en ce que le monomère (méth)acrylique de formule générale (V) est choisi parmis les éléments du groupe constitué par l'acide (méth)acrylique, les acrylates et méthacrylates de méthyle, d'éthyle, de propyle, de butyle, le (méth)-acrylate de glycidyle, le (méth)acrylate d'éther monométhyle de tétraéthylèneglycol, l'acrylamide et le méthacrylamide.

**6.** Composition polymère conforme aux revendications précédentes, caractérisée en ce que l'anhydride cyclique insaturé est l'anhydride *cis*-5-norbornène-endo-2,3-dicarboxylique.

**7.** Composition polymère conforme aux revendications précédentes, caractérisée en ce que l'anhydride cyclique insaturé est l'anhydride *cis*-1,2,3,6-tétrahydrophtalique.

**8.** Composition polymère conforme aux revendications précédentes, caractérisée en ce que l'anhydride cyclique insaturé est le dianhydride bicyclo[2,2,2]oct-7-ène-2,3,5,6-tétracarboxylique.

**9.** Composition polymère conforme aux revendications précédentes, caractérisée en ce que l'anhydride cyclique insaturé est l'anhydride endo-bicyclo[2,2,2]oct-5-ène-2,3-dicarboxylique.

**10.** Composition polymère conforme aux revendications précédentes, caractérisée en ce que l'anhydride cyclique insaturé est l'anhydride maléique.

**11.** Composition polymère conforme aux revendications précédentes, caractérisée en ce que l'anhydride cyclique insaturé est l'anhydride vinylphtalique.

**12.** Composition polymère conforme aux revendications précédentes, caractérisée en ce que les dérivés des anhydrides cycliques insaturés appartiennent au group constitué du maléate de diéthyle, maléate de monoéthyle, maléimide et phénylmaléimide.

**13.** Composition polymère conforme aux revendications précédentes, caractérisée en ce que le monomère polyinsaturé est un composé vinylique aromatique polyinsaturé correspondant à la formule générale (XII) :

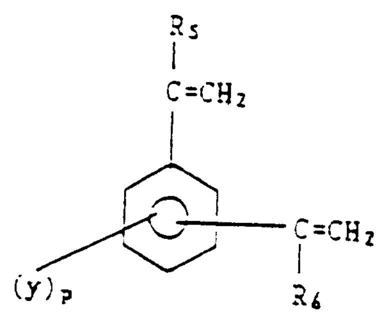

(XII)

dans laquelle y représente un atome d'hydrogène, d'halogène ou un groupe alkyle linéaire ou ramifié en $C_1$-$C_4$, -$OCH_3$ ou

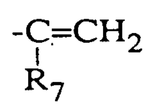

$R_5$, $R_6$, $R_7$ représentent, indépendamment un atome d'hydrogène ou un radical alkyle en $C_1$-$C_4$, et p est un nombre entier valant entre 1 et 4.

**14.** Composition polymère conforme aux revendications précédentes, caractérisée en ce que le monomère polyinsaturé est un polyacrylate correspondant à la formule générale (XIII) :

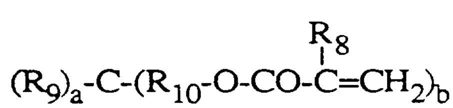

(XIII)

dans laquelle $R_8$ représente un atome d'hydrogène ou un radical méthyle; $R_9$ représente un atome d'hydrogène ou un groupe alkyle linéaire ou ramifié en $C_1$-$C_{10}$; $R_{10}$ répresente un alkyle linéaire biradical en $C_1$-$C_3$; a et b sont deux nombres entiers tels que $a + b = 4$ et $b \geq 2$.

**15.** Composition polymère conforme aux revendications précédentes, caractérisée en ce que le monomère polyinsaturé est un polymaléimide correspondant à la formule générale (XIV) :

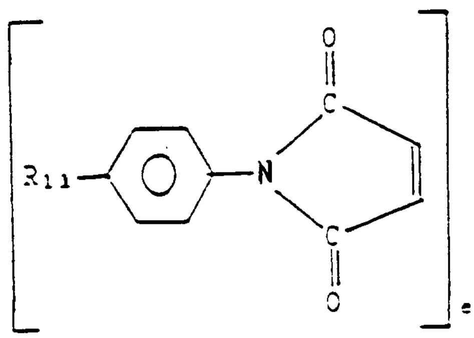

(XIV)

dans laquelle $R_{11}$ représente un radical multiple aliphatique, aromatique ou alkylaromatique, et e un nombre entier ≧ 2.

**16.** Composition polymère conforme à la revendication 13, caractérisée en ce que le composé vinylique aromatique polyinsaturé est le divinylbenzène.

**17.** Composition polymère conforme à la revendication 13, caractérisée en ce que le composé vinylique aromatique polyinsaturé est le trivinylbenzène.

**18.** Composition polymère conforme à la revendication 14, caractérisée en ce que le polyacrylate appartient au groupecomprenant le tétraacrylate de pentaérythritol, le tétraméthacrylate de pentaérythritol, le triacrylate de 1,1,1-triméthylolpropane, le triméthacrylate de 1,1,1-triméthylolpropane.

**19.** Composition polymère conforme à la revendication 15, caractérisée en ce que le polyphénylmaléimide est le bis-maléimide de formule générale (XV) suivante :

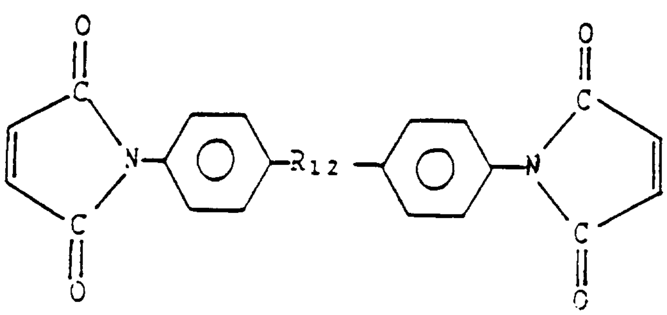

(XV)

dans laquelle $R_{12}$ est un radical bivalent cycloaliphatique ou aliphatique linéaire ou ramifié en $C_1$-$C_{12}$.

**20.** Composition polymère conforme aux revendications précédentes, caractérisée en ce que le (co)-polymère élastomère appartient au groupe constitué de polybutadiène, polyisoprène, copolymère styrène-diène, caoutchouc acrylique, caoutchouc nitrile, caoutchouc butyle, copolymères et terpolymères d'α-oléfines (EPDM, EPR) et copolymères styrène-éthylène-butène.

**21.** Procédé de préparation d'une composition polymère conforme à la revendication 1, comprenant les étapes de :

- dissolution du poly(phénylène éther) (composant a) dans un mélange de composants b) et c), et
- addition du composant d), éventuellement accompagné d'additifs, dans le mélange ainsi obtenu.

**22.** Utilisation de la composition polymère conforme à la revendication 1, pour la production d'articles en plastique par moulage, extrusion-injection ou étendage deladite composition polymère et réticulation de celle-ci par l'action de la chaleur ou des radiations UV.

**23.** Les articles en plastique constitués de la composition réticulable conforme à la revendication 1 et contenant éventuellement des charges ou des additifs.

**Revendications pour l'Etat contractant suivant : ES**

**1.** Procédé de préparation d'une composition polymère durcissable réticulable thermiquement ou par l'action des radiations UV, comprenant :

a) au moins 10 % en poids d'au moins un poly(phénylène éther) représenté par une des formules générales suivantes (I), (II) et (III)

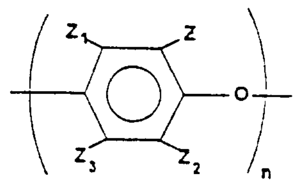

(I)

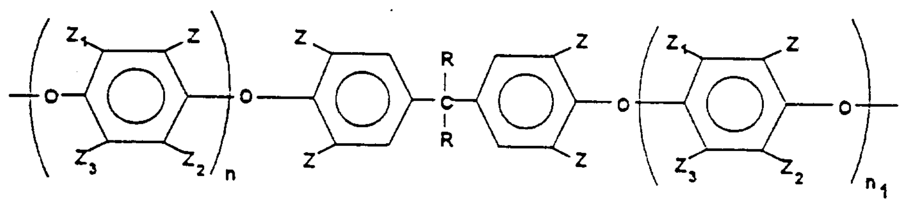

(II)

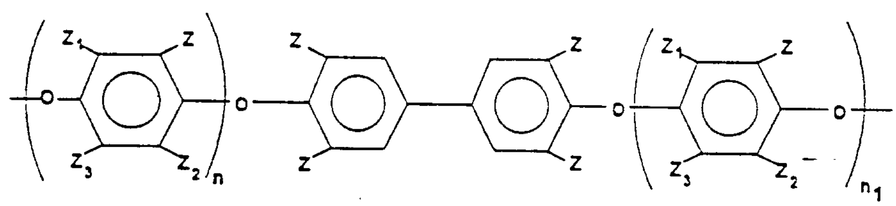

(III)

dans lesquelles Z, $Z_1$, $Z_2$, $Z_3$, sont indépendamment choisis dans le groupe constitué par l'hydrogène, le chlore, le brome, le fluor, un groupe alkyle en $C_1$-$C_4$ ou un groupe alkyle substitué, n et $n_1$ sont indépendamment des nombres entiers supérieurs à 10 et R représente un atome d'hydrogène ou un groupe alkyle en $C_1$-$C_4$;

b) au moins 10 % en poids d'un mélange de monomères monoinsaturés constitué essentiellement de :

$b_1$) de 1 à 97,38 % en poids d'au moins un monomère vinylique aromatique monoinsaturé choisi parmi ceux représentés par la formule générale :

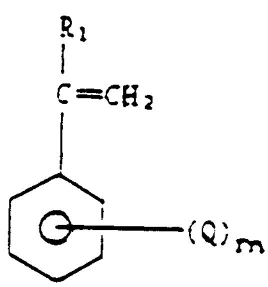

(IV)

dans laquelle $R_1$ représente un atome d'hydrogène ou un groupe alkyle linéaire en $C_1$-$C_4$, Q représente un atome d'hydrogène, d'halogène, un groupe alkyle linéaire ou ramifié en $C_1$-$C_4$, ou un groupe $-OCH_3$, m est un nombre entier entre 1 et 5;

$b_2$) de 0 à 99 % en poids d'au moins un monomère contenant des insaturations vinyliques et/ou au moins un monomère (méth)acrylique représenté par la formule générale (V) :

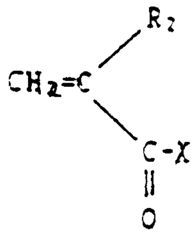

(V)

dans laquelle X représente indépendamment un groupe hydroxyle ou un groupe $-OR_3$, $R_2$ représente un atome d'hydrogène ou un groupe méthyle, $R_3$ représente une chaîne linéaire ou ramifiée en $C_1$-$C_{20}$, un groupe glycidyle ou une chaîne de poly(oxyéthylène) $(-CH_2CH_2O)_n-CH_2CH_2OR_4$, dans laquelle n est un nombre entier entre 0 et 20 et $R_4$ représente un atome d'hydrogène, un groupe méthyle ou amide;

$b_3$) de 2,62 à 99 % en poids d'un composé insaturé choisi parmi les anhydrides cycliques, les anhydrides cycliques comportant des insaturations capables d'être (co)polymérisées par voie radicalaire avec les monomères $b_1$ ou $b_2$,, ou un composé insaturé issu de la réaction entre un dianhydride cyclique insaturé et, respectivement, un alcool, l'ammoniaque, une amine primaire ou secondaire.

$b_4$) de 0 à 99 % en poids d'un composé insaturé issu de la réaction entre un dianhydride cyclique insaturé et, respectivement, un alcool, l'ammoniaque, une amine primaire ou secondaire ou l'eau;

c) de 1 à 80 % en poids d'un monomère polyinsaturé, et

d) de 0,01 à 10 % en poids d'un ou de plusieurs générateurs de radicaux capables d'amorcer la polymérisation thermique et/ou par UV des monomères des composants b) et c),

caractérisé en ce qu'il comprend les étapes suivants :

- dissolution du poly(phénylène éther) (composant a) dans un mélange de composants b) et c), et
- addition du composant d), éventuellement accompagné d'additifs, dans le mélange ainsi obtenu.

**2.** Procédé conforme à la revendication 1, caractérisé en ce que le poly(oxyphénylène) est le poly(2,6-diméthyl-1,4-phénylène éther).

**3.** Procédé conforme aux revendications précédentes, caractérisé en ce que le monomère vinylique aromatique monoinsaturé est le styrène.

**4.** Procédé conforme aux revendications précédentes, caractérisée en ce que les groupes vinyle sont choisis parmi l'acétate de vinyle, le pivalate de vinyle, le propionate de vinyle, le versatate de vinyle et la vinylpyrrolidone.

**5.** Procédé conforme aux revendications précédentes, caractérisé en ce que le monomère (méth)acrylique de formule générale (V) est choisi parmis les éléments du groupe constitué par l'acide (méth)acrylique, les acrylates et méthacrylates de méthyle, d'éthyle, de propyle, de butyle, le (méth)acrylate de glycidyle, le (méth)acrylate d'éther monométhyle de tétraéthylèneglycol, l'acrylamide et le méthacrylamide.

**6.** Procédé conforme aux revendications précédentes, caractérisée en ce que l'anhydride cyclique insaturé est l'anhydride *cis*-5-norbornène-endo-2,3-dicarboxylique.

**7.** Procédé conforme aux revendications précédentes, caractérisé en ce que l'anhydride cyclique insaturé est l'anhydride *cis*-1,2,3,6-tétrahydrophtalique.

**8.** Procédé conforme aux revendications précédentes, caractérisé en ce que l'anhydride cyclique insaturé est le dianhydride bicyclo[2,2,2]oct-7-ène-2,3,5,6-tétracarboxylique.

**9.** Procédé conforme aux revendications précédentes, caractérisé en ce que l'anhydride cyclique insaturé est l'anhydride endo-bicyclo[2,2,2]oct-5-ène-2,3-dicarboxylique.

**10.** Procédé conforme aux revendications précédentes, caractérisé en ce que l'anhydride cyclique insaturé est l'anhydride maléique.

**11.** Procédé conforme aux revendications précédentes, caractérisé en ce que l'anhydride cyclique insaturé est l'anhydride vinylphtalique.

**12.** Procédé conforme aux revendications précédentes, caractérisé en ce que les dérivés des anhydrides cycliques insaturés appartiennent au group constitué du maléate de diéthyle, maléate de monoéthyle, maléimide et phénylmaléimide.

**13.** Procédé conforme aux revendications précédentes, caractérisé en ce que le monomère polyinsaturé est un composé vinylique aromatique polyinsaturé correspondant à la formule générale (XII) :

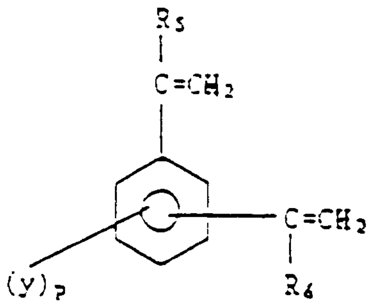

(XII)

dans laquelle y représente un atome d'hydrogène, d'halogène ou un groupe alkyle linéaire ou ramifié en $C_1$-$C_4$, $-OCH_3$ ou

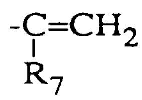

$R_5$, $R_6$, $R_7$ représentent, indépendamment un atome d'hydrogène ou un radical alkyle en $C_1$-$C_4$, et p est un nombre entier valant entre 1 et 4.

**14.** Procédé conforme aux revendications précédentes, caractérisé en ce que le monomère polyinsaturé est un polyacrylate correspondant à la formule générale (XIII) :

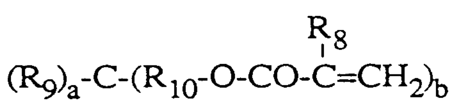

(XIII)

dans laquelle $R_8$ représente un atome d'hydrogène ou un radical méthyle; $R_9$ représente un atome d'hydrogène ou un groupe alkyle linéaire ou ramifié en $C_1$-$C_{10}$; $R_{10}$ répresente un alkyle linéaire biradical en $C_1$-$C_3$; a et b sont deux nombres entiers tels que $a + b = 4$ et $b \geq 2$.

**15.** Procédé conforme aux revendications précédentes, caracterise en ce que le monomère polyinsaturé est un polymaléimide correspondant à la formule générale (XIV) :

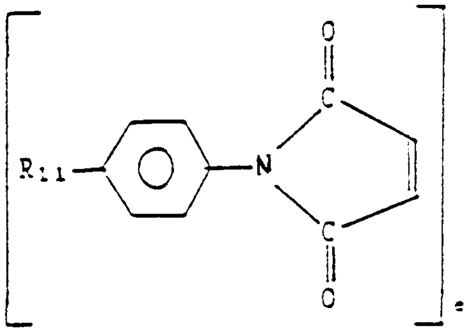

(XIV)

dans laquelle $R_{11}$ représente un radical multiple aliphatique, aromatique ou alkylaromatique, et e un nombre entier ≧ 2.

**16.** Procédé conforme à la revendication 13, caractérisé en ce que le composé vinylique aromatique polyinsaturé est le divinylbenzène.

**17.** Procédé conforme à la revendication 13, caractérisé en ce que le composé vinylique aromatique polyinsaturé est le trivinylbenzène.

**18.** Procédé conforme à la revendication 14, caractérisée en ce que le polyacrylate appartient au groupecomprenant le tétraacrylate de pentaérythritol, le tétraméthacrylate de pentaérythritol, le triacrylate de 1,1,1-triméthylolpropane, le triméthacrylate de 1,1,1-triméthylolpropane.

**19.** Procédé conforme à la revendication 15, caractérisé en ce que le polyphénylmaléimide est le bismaléimide de formule générale (XV) suivante :

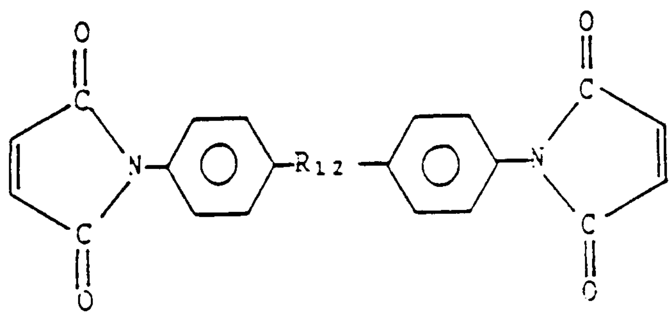

(XV)

dans laquelle $R_{12}$ est un radical bivalent cycloaliphatique ou aliphatique linéaire ou ramifié en $C_1$-$C_{12}$.

**20.** Procédé conforme aux revendications précédentes, caractérisé en ce que le (co)polymère élastomère appartient au groupe constitué de polybutadiène, polyisoprène, copolymère styrène-diène, caoutchouc acrylique, caoutchouc nitrile, caoutchouc butyle, copolymères et terpolymères d'α-oléfines (EPDM, EPR) et copolymères styrène-éthylène-butène.

**21.** Les articles en plastique constitués de la composition réticulable préparé selon la revendication 1 et contenant éventuellement des charges ou des additifs.

Fig.1

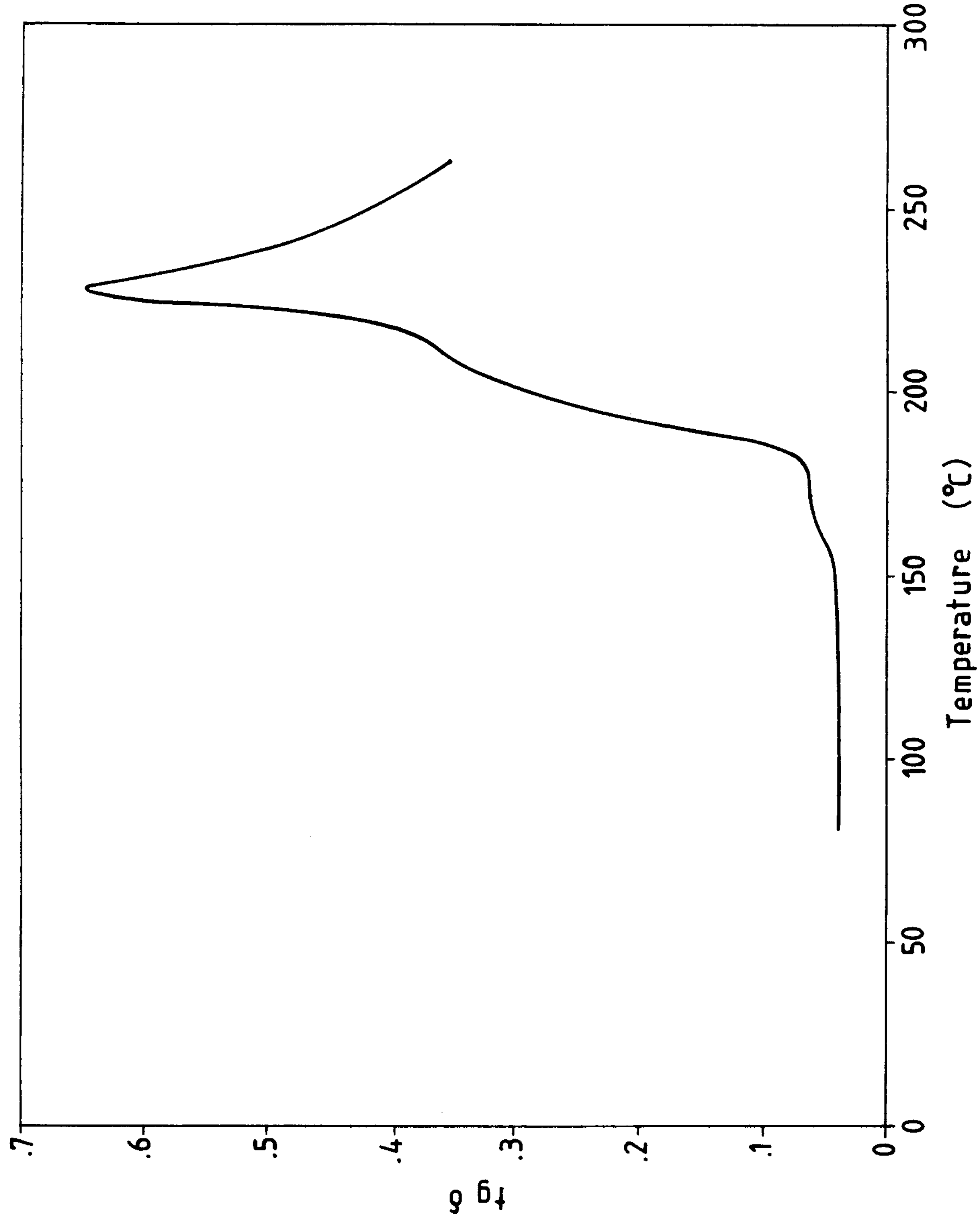

Fig.2

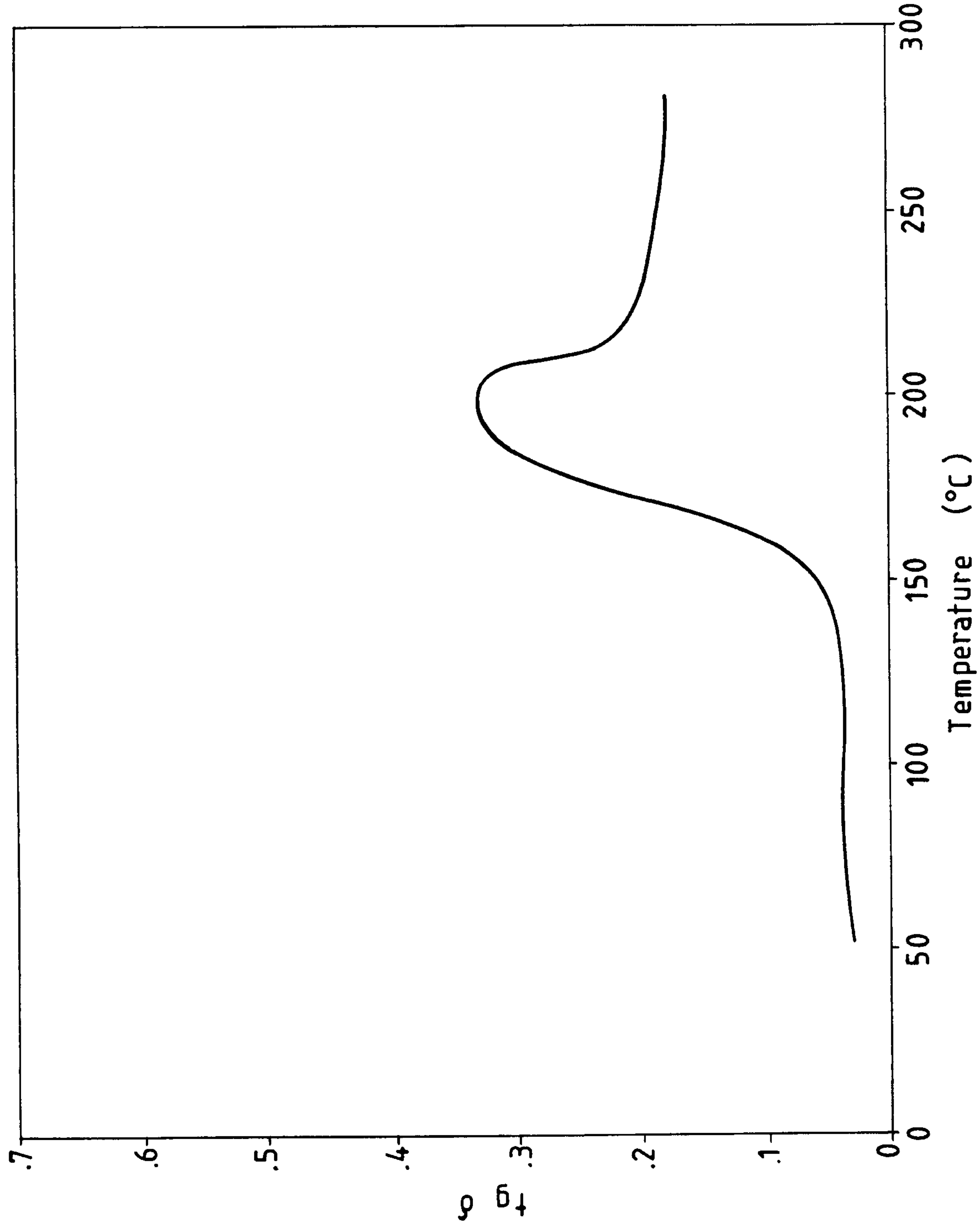

Fig.3

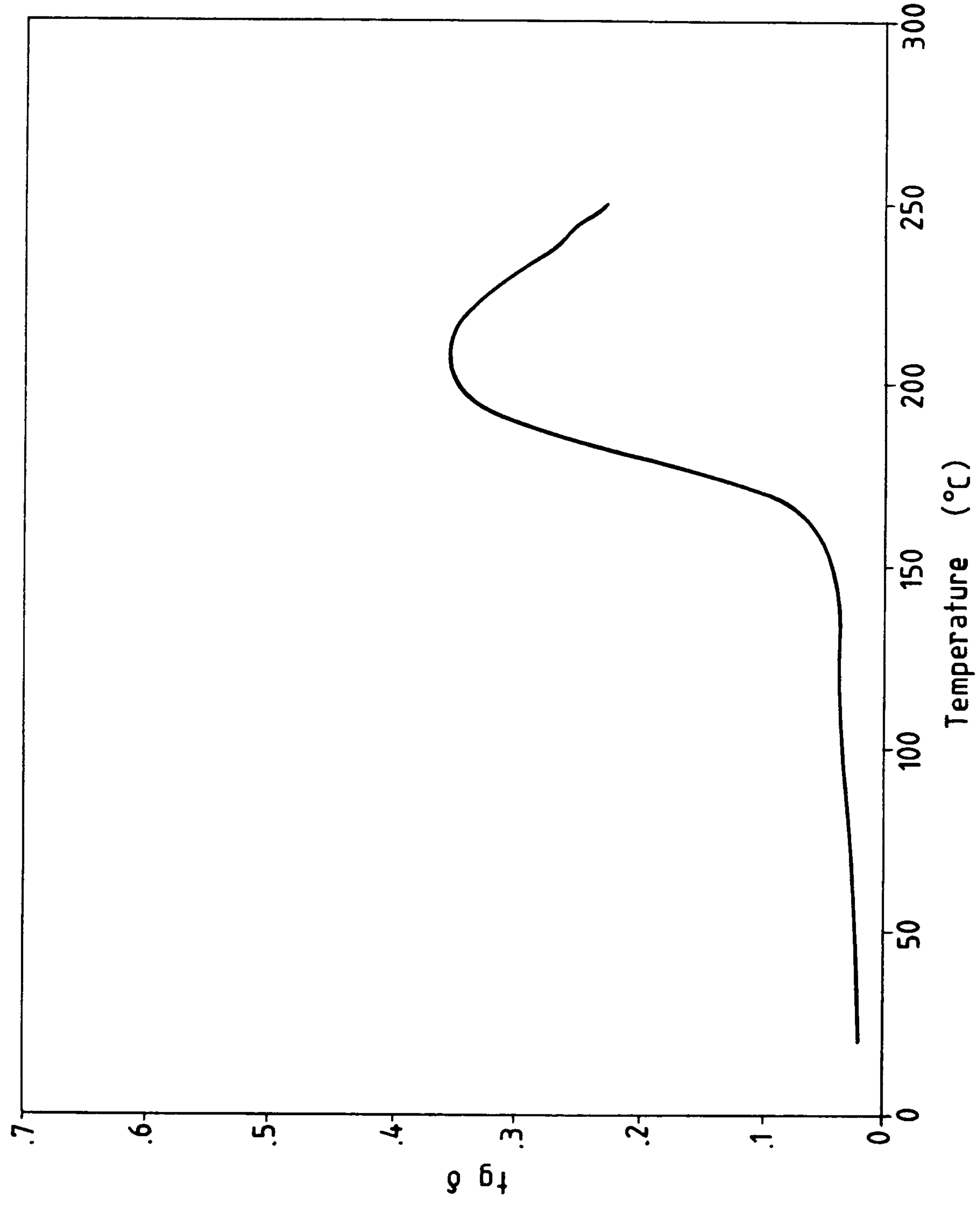

Fig. 4